(19) Europäisches Patentamt
European Patent Office
Office européen des brevets

(11) **EP 3 487 236 A1**

(12) **EUROPEAN PATENT APPLICATION**

(43) Date of publication:
**22.05.2019 Bulletin 2019/21**

(51) Int Cl.:
***H04W 72/02*** (2009.01)

(21) Application number: **18206447.7**

(22) Date of filing: **15.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.11.2017 US 201762587423 P**
**12.02.2018 US 201862629151 P**
**31.10.2018 TW 107138692**

(71) Applicant: **Industrial Technology Research Institute**
**Hsinchu 31040 (TW)**

(72) Inventors:
• SHEU, Chorng-Ren
**807 Kaohsiung City (TW)**
• TSAI, Hua-Lung
**104 Taipei City (TW)**
• HU, Heng-Ming
**320 Taoyuan City (TW)**

(74) Representative: **Becker Kurig Straus**
**Patentanwälte**
**Bavariastrasse 7**
**80336 München (DE)**

(54) **USER EQUIPMENT AND RESOURCE SENSING AND SELECTION METHOD THEREOF**

(57)    A user equipment (UE) (100) and its resource sensing and selection method adapted to a UE (100) is provided. The resource sensing and selection method includes following steps. Channel statuses for all component carriers (CCs) are measured and obtained. Several candidate CCs are determined from all the CCs according to the measurement values of the channel statuses for all the CCs and a proximity-based service per-packet priority (PPPP) (PPPP1, PPPP2, PPPP3, PPPP4) corresponding to the UE (100). At least one of the candidate CCs is selected as at least one selected usable CC, and a resource sensing and selection process is performed on the at least one selected usable CC.

FIG. 3

**Description**

TECHNICAL FIELD

The disclosure relates to a user equipment (UE) and a resource sensing and selection method thereof.

BACKGROUND

In the third generation partnership project (3GPP) long term evolution (LTE) Release 14, a cellular vehicle-to-everything (C-V2X) standard has been proposed. The LTE-based C-V2X standard focuses on communication between vehicles and other objects, e.g., vehicle to vehicle, vehicle to infrastructure, vehicle to pedestrian, and so on. Besides, the C-V2X communication is a device-to-device (D2D) communication based on proximity-based services (ProSe). The vehicle-to-vehicle (V2V) communication is an extension of the D2D communication, which uses a PC5 interface to enhance direct connection and communication between vehicles.

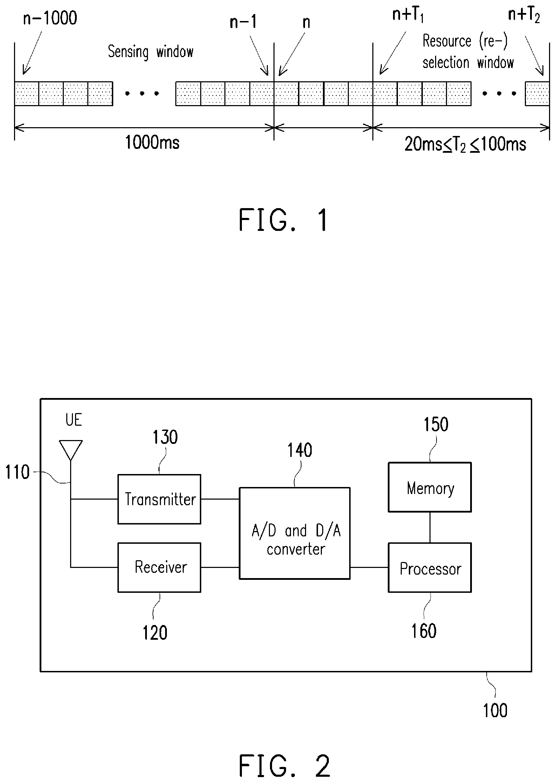

In the Study Items and Work Items of 3GPP V2X phase 2 of Release 15, two topics for PC5 functionalities, which are carrier aggregation (CA) and reduce the maximum time between packet arrival at layer 1 (i.e., physical layer) and resource selected for transmission, have been proposed as objectives. The two topics can be co-existed in the same resource pools and use the same scheduling assignment (SA) format defined in Release 14. Here, to reduce the latency in physical layer, it has been concluded to an agreement related to the reduction of the resource selection window (i.e., to reduce the parameter T2) in 3GPP standard RAN1 meeting. FIG. 1 is a schematic view of a resource sensing and selection window in Release 14. With reference to FIG. 1, a parameter T2 of a time length of the original resource selection/re-selection window is within a range from 20 ms to 100 ms, so the window may be reduced to have the time length shorter than 20 ms. As shown in FIG. 1, n is a time reference point, and [(n+T1), (n+T2)] is a duration of the resource selection/re-selection window. The reduction of the resource selection/re-selection window will lead to smaller resources which may be selected for data transmission, thereby increasing the possibility that different user equipment (UEs) may select the same resource (i.e., resulting in collision). A CA technology may be applied to increase the number of component carriers (CCs), so as to mitigate the resource selection collisions. However, while the CA technology is applied, how to improve spectrum efficiency without the assistance of base stations (i.e., V2X mode 4) for more UEs is one of the main challenges. It can be learned that the issues of CA and the reduction of the resource selection/re-selection window should be further studied.

SUMMARY

The disclosure provides a user equipment (UE) and a resource sensing and selection method thereof.

In an embodiment of the disclosure, the resource sensing and selection method is adapted to a UE with no assistance of any base station, and the resource sensing and selection method includes following steps. Channel statuses for all component carriers (CCs) are measured and obtained. Several candidate component carriers (CCs) are determined from all the CCs according to the measurement values of the channel statuses for all the CCs and a proximity-based service per-packet priority (ProSe per-packet priority, PPPP) corresponding to the UE. At least one of the candidate CCs is selected as at least one selected usable CC, and a resource sensing and selection process is performed on the at least one selected usable CC.

In an embodiment of the disclosure, a UE at least includes, but not limited to, a receiver, a transmitter, and a processor. The receiver receives a signal. The transmitter transmits the signal. The processor is coupled to the receiver and the transmitter. Besides, the processor is configured to perform following steps. Channel statuses for all CCs are measured and obtained through the receiver. Several candidate CCs are determined from all the CCs according to the measurement values of the channel statuses for all the CCs and a PPPP corresponding to the UE. At least one of the candidate CCs is selected as at least one selected usable CC, and a resource sensing and selection process is performed on the at least one selected usable CC through the receiver.

Several exemplary embodiments accompanied with figure are described in detail below to further describe the disclosure in details.

BRIEF DESCRIPTION OF THE DRAWINGS

The accompanying drawing is included to provide further understanding, and is incorporated in and constitutes a part of this specification. The drawing illustrates exemplary embodiments and, together with the description, serves to explain the principles of the disclosure.

　　FIG. 1 is a schematic view of a resource sensing and selection window.

FIG. 2 is a block view of components of a user equipment (UE) according to an embodiment of the disclosure.

FIG. 3 is a flowchart illustrating a resource sensing and selection method according to an embodiment of the disclosure.

FIG. 4A and FIG. 4B are schematic views exemplarily illustrating a resource sensing process, respectively.

FIG. 5 is a schematic view of information exchange between different layers according to an embodiment of the disclosure.

FIG. 6 is a schematic view of selection of selected usable component carriers (CCs) according to an embodiment of the disclosure.

FIG. 7 is a flowchart illustrating a resource sensing and selection process performed on a selected usable CC according to an embodiment of the disclosure.

FIG. 8A to FIG. 8D are schematic views of a resource sensing process according to an embodiment of the disclosure.

FIG. 9A and FIG. 9B are schematic views exemplarily illustrating division of a resource pool, respectively.

FIG. 10A and FIG. 10B are schematic views exemplarily illustrating resource selection and resource re-selection.

## DESCRIPTION OF THE EMBODIMENTS

FIG. 2 is a block view of components of a user equipment (UE) 100 according to an embodiment of the disclosure. With reference to FIG. 2, a UE 100 is used for vehicle-to-everything (V2X) communication mode 4 (may also be a vehicle-to-vehicle (V2V), a device-to-device (D2D), or another technology of direct communication between two apparatuses) and is able to support a carrier aggregation (CA) technology. The UE 100 may be implemented in various manners and may be an apparatus fixed on a mobile vehicle (e.g., a car, a motorcycle, a bicycle, a ship, an airplane, etc.); alternatively, the UE 100 may also be a device (e.g., a cell phone, a laptop computer, a tablet, a watch, etc.).

The UE 100 at least includes, but not limited to, one or more antennas 110, a receiver 120, a transmitter 130, an analog-to-digital (A/D) and digital-to-analog (D/A) converter 140, a memory 150, and a processor 160.

The receiver 120 and the transmitter 130 are respectively configured to receive and transmit a signal through the antenna 110 wirelessly. Besides, the receiver 120 and the transmitter 130 can perform analog signal processing operations, such as low noise amplification, impedance matching, frequency mixing, frequency up-conversion or down-conversion, filtering, amplification, and the like. The A/D and D/A converter 140 is configured to convert an analog signal to a digital signal and convert a digital signal to an analog signal.

The memory 150 may be any type of fixed or movable random access memory (RAM), read-only memory (ROM), flash memory, any other similar component, or a combination of said components. The memory 150 is configured to store programming codes, device configuration, codebook, buffered or permanent data, e.g., a channel status threshold value-proximity-based service per-packet priority (PPPP) mapping table, measurement values of channel statuses, information of UE capability, resource occupancy information, energy threshold values, previous information, and so on, which will be elaborated hereinafter. The memory 150 is also configured to record a physical layer, a media access control (MAC) layer, a logical link control (LLC) layer, a network service layer, an upper layer, or any other communication protocol related software module.

The processor 160 is configured to process a digital signal and execute procedure according to the exemplary embodiments of the disclosure and is able to access or load information and software modules recorded in the memory 150. The functions of the processor 160 may be achieved by a central processing unit (CPU), a microprocessor, a micro-controller, a digital signal processing (DSP) chip, a field programmable gate array (FPGA), or another programmable unit. Alternatively, the functions of the processor 160 may also be implemented by an individual electronic apparatus, an integrated circuit (IC), or software.

In order to facilitate the understanding of the operation flow provided in the embodiments of the disclosure, several embodiments are provided below to elaborate the operation flow of the UE 100.

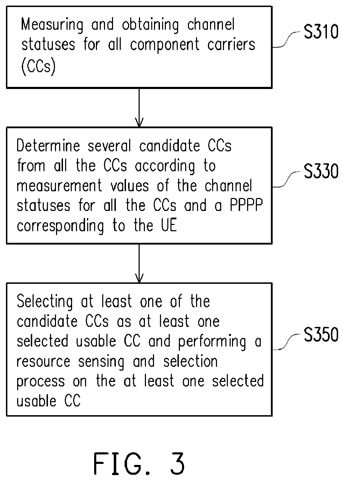

FIG. 3 is a flowchart illustrating a resource sensing and selection method according to an embodiment of the disclosure. With reference to FIG. 3, the resource sensing and selection method provided in the present embodiment is adapted to the UE 100 depicted in FIG. 2. Various components and modules of the UE 100 will be provided in the following paragraphs to explain the resource sensing and selection method. Each step of the method can be adjusted according to actual implementation situations and is not limited hereto.

The processor 160 measures and obtains channel statuses for all component carriers (CCs) through the receiver 120 (step S310). Specifically, according to the CA technology, two or more CCs with continuous or discontinuous certain bandwidths (for example, 10, 20, or 50 MHz) can be simultaneously combined to increase the total bandwidth for data transmission, thereby increasing the transmission rate. If the number of CCs which can be selected by the UE 100 increases (e.g., 3GPP V2X phase 2 study item/work item has defined that the CA can use up to eight CCs), available (radio) resources can also increase. If the selection of resources by the UE 100 can be effectively scheduled, the transmission efficiency of one single UE or even the entire system may be improved. Here, the channel status can be applied to evaluate whether resources are occupied, busy, idle, and/or interfered, and a measurement value of the channel status may be a channel busy ratio (CBR), a channel occupancy ratio (CR), a received signal strength indication (RSSI), a reference signal received quality (RSRQ), a reference signal received power (RSRP), a signal-to-noise ratio, or any other value associated with channel usage.

In an embodiment, a time for resource sensing in each CC relates to a specific period (e.g., the duration of the sensing window shown in FIG. 1 is 1000 ms). The processor 160 divides the sensing window or any other resource sensing period into one or more measurement periods (e.g., 50, 100, 200, and/or 500 ms, which may be determined randomly or defined in advance). For instance, if the measurement period is 500 ms, one sensing window may be divided into two measurement periods. The processor 160 can then measure and obtain the channel statuses for all of the CCs in one or more measurement periods through the receiver 120.

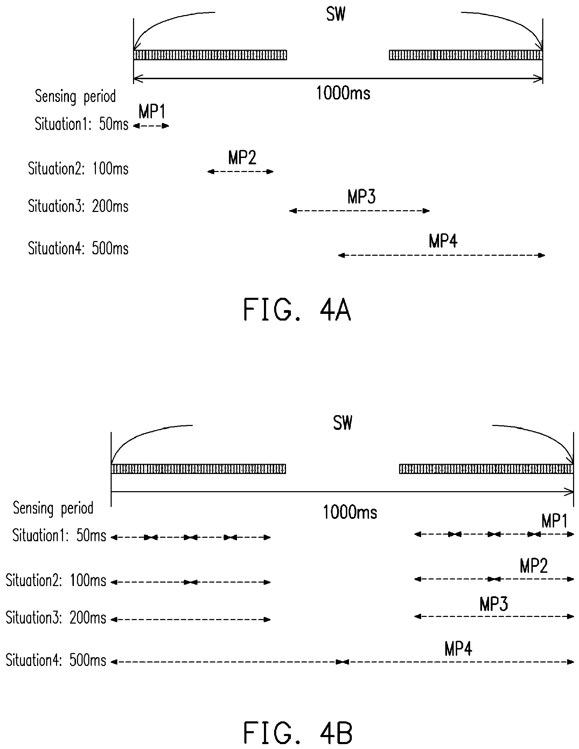

FIG. 4A and FIG. 4B are schematic views exemplarily illustrating a resource sensing process, respectively. With reference to FIG. 4A, if the sensing window SW configured for resource sensing is assumed to be 1000 ms, measurement periods MP1, MP2, MP3, and MP4 are 50, 100, 200, and 500 ms, respectively. Within one sensing window SW in each CC, the processor 160 may randomly/arbitrarily or specifically select one of the measurement periods MP1-MP4 (which may be overlapped or not) and measure a CBR in the selected measurement periods MP1-MP4. The processor 160 may arbitrarily or specifically select one or more measured CBRs from the measurement periods MP1-MP4. If the processor 160 merely selects one of the measurement periods MP1, MP2, MP3, and MP4, the CBR corresponding to the selected one of the measurement period MP1, MP2, MP3, and MP4 is directly deemed as a rough measurement value of a channel status. If the processor 160 selects more than one of the measurement periods MP1, MP2, MP3, and MP4, the average of the CBRs corresponding to the selected measurement periods is considered as the rough measurement value of the channel status.

With reference to FIG. 4B, if the sensing window SW is 1000 ms, the measurement periods MP1, MP2, MP3, and MP4 are 50, 100, 200, and 500 ms, respectively. The processor 160 may equally divide one sensing window SW in each CC by different measurement periods MP1-MP4 and measure the CBR in each of the measurement periods MP1-MP4. The processor 160 firstly obtains the average of the CBRs corresponding to the measurement periods MP1-MP4. The processor 160 may arbitrarily or specifically select one or the average of more measured CBRs from the measurement periods MP1-MP4. If the processor 160 merely selects one of the measurement periods MP1, MP2, MP3, and MP4, the CBR corresponding to the selected one of the measurement periods MP1, MP2, MP3, and MP4 is directly deemed as a rough measurement value of a channel status for the CC. If the processor 160 selects more than one of the measurement periods MP1, MP2, MP3, and MP4, a value calculated by averaging again the average of the CBRs corresponding to the selected measurement periods is considered as the rough measurement value of the channel status for the CC. The value is obtained by dividing the sum of the average of the CBRs corresponding to the selected measurement periods by the number of the selected measurement periods.

Note that the length of the measurement periods MP1, MP2, MP3, and MP4 and the channel statuses adopted with reference to FIG. 4A and FIG. 4B are merely exemplary and may be modified according to actual requirements.

The processor 160 can determine several candidate CCs from all the CCs according to the measurement values of the channel statuses for all the CCs and the PPPP corresponding to the UE 100 (step S330). Specifically, a transmission between two UEs 100 in the V2X mode 4 is via a PC5 interface. According to the 3GPP TS 23.303 and TS 36.300 standards, when a ProSe upper layer performs the transmission of protocol data unit through the PC5 interface, the ProSe upper layer provides PPPP information for such transmission (selected from 8 possible numeral ranges). The PPPP information is a quantitative value associated with the protocol data unit, and it gives priority to the transmission of the protocol data unit. Each UE 100 is assigned a specific PPPP value, so as to give priority to the PC5-S message or other protocol data units transmitted by each UE 100 (e.g., the transmission with higher priority is processed first, and the transmission with lower priority is processed later).

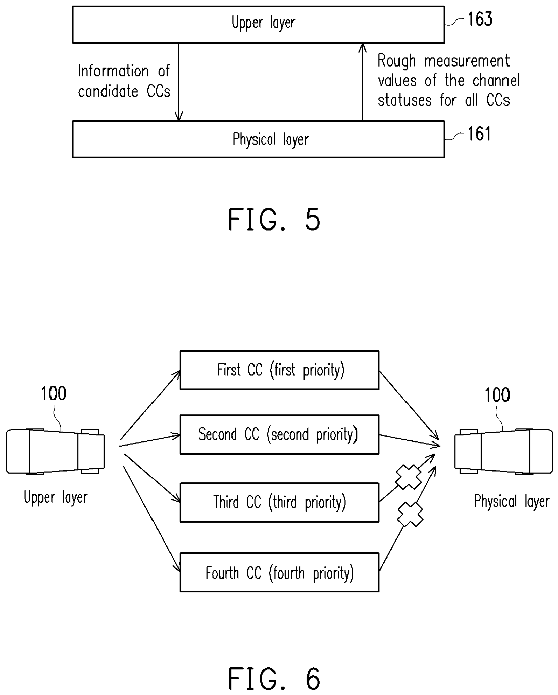

FIG. 5 is a schematic view of information exchange between different layers according to an embodiment of the disclosure. With reference to FIG. 5, in view of a protocol stack, the processor 160 executes a software module of the physical layer 161 and transmits the rough measurement values of the channel statuses for all the CCs (e.g., the CBRs, the CRs, signal strength, etc.) to the upper layer 163. Please refer to the descriptions of the step S310 provided above. The processor 160 executes a software module of the upper layer 163, determines the candidate CCs from all of the CCs according to the measurement values of the channel statuses for all of the CCs and the PPPP granted to the UE 100, and transmits the information of the determined candidate CCs to the physical layer 161. The method of determining the candidate CCs is explained hereinafter.

In an embodiment, the processor 160 compares the measurement value of the channel status for each of the CCs with a channel status threshold value corresponding to the PPPP granted to the UE 100 and to each of the CCs, so as to determine whether each of the CCs is a busy CC or an idle CC. The channel status threshold value is, for instance, a CBR threshold value, a CR threshold value, a signal-to-noise threshold ratio, and so on, and the channel status threshold value corresponds to the type of the channel statuses. Data transmission will be seriously interfered if the CC is a busy CC, thus resulting in transmission failure or excessive failure. On the other hand, the idle CC may serve as the candidate CC, and the interference of data transmission on the idle CC is lower than the interference of data transmission on the busy CC. In response to the measurement value of the channel status for a certain CC being smaller than the corresponding channel status threshold value, this CC is considered by the processor 160 as a candidate CC. In response to the measurement value of the channel status for this CC being greater than or equal to the corresponding channel status threshold value, the processor 160 does not consider (or prohibit/stop considering) this CC as a candidate CC. In light of the above, the determination of the channel status threshold value may affect the determination of the candidate CCs.

In an embodiment, the processor 160 obtains a channel status threshold value-PPPP mapping table (which is defined in advance or is received from instructions of other apparatuses). The channel status threshold value-PPPP mapping table records all channel status threshold values corresponding to all of the corresponding PPPPs and to all of the CCs. The processor 160 may then compare the measurement value of the channel status corresponding to the PPPP of the user equipment and to each of the CCs with the channel status threshold value corresponding to the same PPPP and to the same one of the CCsin the channel status threshold value-PPPP mapping table. The channel status threshold value can be between an upper limit and a lower limit, and the upper and lower limits may be of a fixed value or may be adjusted. For instance, the upper limit of the CBR threshold value is 0.8, and the lower limit is 0.35.

In an embodiment, all of the PPPPs recorded by the channel status threshold value-PPPP mapping table include corresponding indexes that may be arranged according to a priority order. For instance, the channel status threshold value-PPPP mapping table records a first PPPP-an $m^{th}$ PPPP (i.e., PPPP1-PPPPm, wherein the index i of PPPPi is a positive integer ranging from 1 to m). The first PPPP has the highest priority, the second PPPP has the second highest priority, and the others can be deduced therefrom, i.e., the $m^{th}$ PPPP has the lowest priority in the priority order. Each PPPP corresponds to at least one service type, and the priority of these services types is the same.

Besides, each PPPP is assigned a certain number of CCs. In an embodiment, as to the numbers of the CCs corresponding to all PPPPs recorded in the channel status threshold value-PPPP mapping table, the number of the CCs corresponding to a PPPP with higher priority in the priority order is greater than or equal to the number of the CCs corresponding to a PPPP with lower priority in the priority order, which is mathematically expressed as follows:

$$n_1 \geq n_2 \geq \cdots \geq n_m \qquad \ldots(1)$$

, wherein $n_1$ represents the number of CCs corresponding to the first PPPP, and the others can be deduced therefrom. That is, the higher the priority of the PPPPs, the more the CCs assigned to the PPPPs, so as to reduce the possibility of resource selection collisions and improve reliability for the PPPP with higher priority.

In an embodiment, all CCs corresponding to each of the PPPPs recoded in the channel status threshold value-PPPP mapping table include corresponding indexes arranged according to a second priority order. As to the second priority order of the CCs corresponding to the PPPPs, an index of a CC with higher priority in the second priority order is smaller than or equal to an index of another CC with lower priority in the second priority order. For instance, the channel status threshold value-PPPP mapping table records that PPPP1 corresponds to M CCs, including the first CC-the $M^{th}$ CC (i.e., CC1-CCM, wherein the index i of the CCi is a positive integer from 1 to M), and the second priority order is CC1≥, CC2≥, ... ,≥ CCM. Besides, as to indexes with a foremost order arranged in the second priority order among the indexes of the CCs corresponding to all of the PPPPs, the index with the foremost order in the CCs corresponding to a PPPP with higher priority in the priority order is smaller than or equal to the index with the foremost order in the CCs corresponding to a PPPP with lower priority in the priority order. The relationship is mathematically expressed as follows:

$$l_1 \geq l_2 \geq \cdots \geq l_m \qquad \ldots(2)$$

, wherein $l_1$ represents an index offset of the CC corresponding to the first PPPP (the index with the foremost order may be obtained by adding one to said index offset), and the rest may be deduced therefrom. The index of the CC corresponding to the $i^{th}$ PPPP (the index i is a positive integer from 1 to m) is $l_i + k$, wherein $k \in \{1, ..., n_i\}$. For instance, the number of the CCs corresponding to the first PPPP is eight, i.e., the first CC to the eighth CC, wherein $n_1 = 8$ and $l_1 = 0$ (the index with the foremost order is $l_i+1=1$). The number of the CCs corresponding to the eighth PPPP is one, i.e., the eighth CC, wherein $n_8 = 1$ and $l_8 = 7$ (the index with the foremost order is $l_8+1=8$). That is, a PPPP having higher priority in the priority order is more likely to be assigned to a CC having the smaller index. In view of the above, by using the assignment to the PPPP with higher priority for CC having the smaller index and the priority order of the CCs corresponding to each PPPP, the CCs corresponding to each PPPP can be separated as much as possible, and each PPPP would be corresponding to different component carriers (CCs) selected as the candidate CCs. Therefore, the possibility of resource selection collisions can be reduced and the reliability can be improved.

In different embodiments, in each of the CCs, the channel status threshold value corresponding to each of the PPPPs recorded in the channel status threshold value-PPPP mapping table may differ from each other. In an embodiment, as to the channel status threshold values corresponding to all the CCs in each of the PPPPs, the channel status threshold value corresponding to the front CC (i.e., with the smaller index) is greater than the channel status threshold values corresponding to the rear CC (i.e., with the greater index), which may be mathematically expressed as follows:

$$\delta_{i,1} > \delta_{i,2} > \cdots > \delta_{i,n_i} \qquad \ldots(3)$$

wherein $\delta_{i,n_i}$ represents the channel status threshold value corresponding to the $i^{th}$ PPPP in the $n_i^{th}$ CC, and the rest may be deduced therefrom. For instance, the CBR threshold value corresponding to the first PPPP in the first CC is 0.8, and the CBR threshold value corresponding to the first PPPP in the second CC is 0.75. That is, the channel status threshold value corresponding to a PPPP in a CC having smaller index is greater than the channel status threshold value corresponding to the same PPPP in another CC having larger index. The smaller the channel status threshold values, the lower the possibility of the CCs being determined as the candidate CCs. That is, according to said configuration, if the measurement values of channel statuses for each CC are substantially the same, it is more likely for the processor 160 to determine a CC having smaller index as a candidate CC. Thereby, each PPPP can correspond to different CCs as the candidate CCs as much as possible, so as to reduce the possibility of resource selection collisions and improve reliability.

The number of PPPPs corresponding to one CC may be more than one, and one single CC may corresponds to a PPPP group including one or more PPPPs. In the same PPPP group, the number of the CCs corresponding to all PPPPs and the index offset of the CCs are the same. In an embodiment, in each of the CCs, the corresponding channel status threshold values corresponding to all the PPPPs recorded in the channel status threshold value-PPPP mapping table may differ from each other. For instance, in the third CC, the corresponding channel status threshold value of the first PPPP is 0.65, and the corresponding channel status threshold value of the second PPPP is 0.7.

Besides, the channel status threshold values recorded in the channel status threshold value-PPPP mapping table corresponding to the resource selection window at different time lengths (i.e., the parameter T2 as shown in FIG. 1) may be different, and the UE 100 can perform resource selection in the resource selection window. In an embodiment, given that the time length of the first resource selection window is shorter than the time length of the second resource selection window. The channel status threshold value corresponding to one CC recorded in a channel status threshold value-PPPP mapping table corresponding to the first resource selection window should be greater than the channel status threshold value corresponding to the same CC recorded in a channel status threshold value-PPPP mapping table corresponding to the second resource selection window. That is, if the time length of the resource selection window is reduced, the channel status threshold values corresponding to the same CC are increased, so as to increase the possibility that the CC is determined to be the candidate CC and reduce the possibility of resource selection collisions. For instance, the channel status threshold value corresponding to the third PPPP and to the third CC recorded in the mapping table corresponding to the first resource selection window with 10 ms in time length is 0.7. The channel status threshold value corresponding to the same third PPPP and to the same third CC recorded in the mapping table corresponding to the second resource selection window with 20 ms in time length is 0.6.

For easy understanding, examples of CBR-PPPP-service type mapping table are provided with reference to Table (1)-Table (10). The parameter m of the number of PPPPs and the parameter M of the number of CCs are both 8 in Table (1)-Table (6). Here, the PPPP groups indicated in Table (1), Table (3), and Table (5) respectively include one, two, and three PPPPs, and the parameter T2 of the resource selection window is 20 ms. The groups indicated in Table (2), Table (4), and Table (6) respectively include one, two, and three PPPPs, and the parameter T2 of the resource selection window is 10 ms. The PPPP groups indicated in Table (7)-Table (10) all include two PPPPs. Here, the (m, M) parameter combinations, in which the number of PPPPs is the parameter m and the number of CCs is the parameter M, in Table (7) and Table (9) are (8,4) and (4,8), respectively, and the parameter T2 of the resource selection window is 20 ms. The (m, M) parameter combinations, in which the number of PPPPs is the parameter m and the number of CCs is the parameter M, in Table (8) and Table (10) are (8,4) and (4,8) as well, and the parameter T2 of the resource selection window is 10 ms. Table (1) to Table (10) all include two service types, i.e., #1 and #2.

In Table (1), the PPPP group corresponding to one CC includes one PPPP, a parameter T2 of a resource selection window is 20 ms, the number of CCs corresponding to PPPP1-PPPP8 is $(n_1,n_2,n_3,n_4,n_5,n_6,n_7,n_8) = (8,7,6,5,4,3,2,1)$, and an index offset of the CCs corresponding to PPPP1-PPPP8 is $(l_1,l_2,l_3,l_4,l_5,l_6,l_7,l_8) = (0,1,2,3,4,5,6,7)$.

Table (1)

| CCs Index | PPPP (CBR Threshold Value) | PPPP | Service type |
|---|---|---|---|
| 1 | PPPP1 (0.75) | PPPP1 | PPPP1 (#1, #2) |
| 2 | PPPP1 (0.7), PPPP2 (0.75) | PPPP 1,2 | PPPP1(#1), PPPP2 (#1, #2) |
| 3 | PPPP1 (0.65), PPPP2 (0.7), PPPP3 (0.75) | PPPP 1,2,3 | PPPP1 (#2), PPPP2 (#1), PPPP3 (#1, #2) |
| 4 | PPPP1 (0.6), PPPP2 (0.65), PPPP3 (0.7), PPPP4 (0.75) | PPPP 1,2,3,4 | PPPP1 (#1), PPPP2 (#2), PPPP3 (#1), PPPP4 (#1, #2) |
| 5 | PPPP1 (0.55), PPPP2 (0.6), PPPP3 (0.65), PPPP4 (0.7), PPPP5 (0.75) | PPPP 1,2,3,4,5 | PPPP1 (#2), PPPP2 (#1), PPPP3 (#2), PPPP4 (#1), PPPP5 (#1, #2) |
| 6 | PPPP1 (0.5), PPPP2 (0.55), PPPP3 (0.6), PPPP4 (0.65), PPPP5 (0.7), PPPP6 (0.75) | PPPP 1,2,3,4,5,6 | PPPP1 (#1), PPPP2 (#2), PPPP3 (#1), PPPP4 (#2), PPPP5 (#1), PPPP6 (#1, #2) |
| 7 | PPPP1 (0.45), PPPP2 (0.5), PPPP3 (0.55), PPPP4 (0.6), PPPP5 (0.65), PPPP6 (0.7), PPPP7 (0.75) | PPPP 1,2,3,4,5,6,7 | PPPP1 (#2), PPPP2 (#1), PPPP3 (#2), PPPP4 (#1), PPPP5 (#2), PPPP6 (#1), PPPP7 (#1, #2) |
| 8 | PPPP1 (0.4), PPPP2 (0.45), PPPP3 (0.5), PPPP4 (0.55), PPPP5 (0.6), PPPP6 (0.65), PPPP7 (0.7), PPPP8 (0.75) | PPPP 1,2,3,4,5,6,7,8 | PPPP1 (#1), PPPP2 (#2), PPPP3 (#1), PPPP4 (#2), PPPP5 (#1), PPPP6 (#2), PPPP7 (#1), PPPP8 (#1, #2) |

In Table (2), the PPPP group corresponding to one CC includes one PPPP, the parameter T2 of the resource selection window is 10 ms, the number of CCs corresponding to PPPP1-PPPP8 is $(n_1,n_2,n_3,n_4,n_5,n_6,n_7,n_8) = (8,7,6,5,4,3,2,1)$, and the index offset of the CCs corresponding to PPPP1-PPPP8 is $(l_1,l_2,l_3,l_4,l_5,l_6,l_7,l_8) = (0,1,2,3,4,5,6,7)$.

Table (2)

| Indexes of CCs | PPPP (CBR Threshold Value) | PPPP | Service type |
|---|---|---|---|
| 1 | PPPP1 (0.8) | PPPP 1 | PPPP1 (#1, #2) |
| 2 | PPPP1 (0.75), PPPP2 (0.8) | PPPP 1,2 | PPPP1 (#1), PPPP2 (#1, #2) |
| 3 | PPPP1 (0.7), PPPP2 (0.75), PPPP3 (0.8) | PPPP 1,2,3 | PPPP1 (#2), PPPP2 (#1), PPPP3 (#1, #2) |
| 4 | PPPP1 (0.65), PPPP2 (0.7), PPPP3 (0.75), PPPP4 (0.8) | PPPP 1,2,3,4 | PPPP1 (#1), PPPP2 (#2), PPPP3 (#1), PPPP4 (#1, #2) |
| 5 | PPPP1 (0.6), PPPP2 (0.65), PPPP3 (0.7), PPPP4 (0.75), PPPP5 (0.8) | PPPP 1,2,3,4,5 | PPPP1 (#2), PPPP2 (#1), PPPP3 (#2), PPPP4 (#1), PPPP5 (#1, #2) |
| 6 | PPPP1 (0.55), PPPP2 (0.6), PPPP3 (0.65), PPPP4 (0.7), PPPP5 (0.75), PPPP6 (0.8) | PPPP 1,2,3,4,5,6 | PPPP1 (#1), PPPP2 (#2), PPPP3 (#1), PPPP4 (#2), PPPP5 (#1), PPPP6 (#1, #2) |
| 7 | PPPP1 (0.5), PPPP2 (0.55), PPPP3 (0.6), PPPP4 (0.65), PPPP5 (0.7), PPPP6 (0.75), PPPP7 (0.8) | PPPP 1,2,3,4,5,6,7 | PPPP1 (#2), PPPP2 (#1), PPPP3 (#2), PPPP4 (#1), PPPP5 (#2), PPPP6 (#1), PPPP7 (#1, #2) |
| 8 | PPPP1 (0.45), PPPP2 (0.5), PPPP3 (0.55), PPPP4 (0.6), PPPP5 (0.65), PPPP6 (0.7), PPPP7 (0.75), PPPP8 (0.8) | PPPP 1,2,3,4,5,6,7,8 | PPPP1 (#1), PPPP2 (#2), PPPP3 (#1), PPPP4 (#2), PPPP5 (#1), PPPP6 (#2), PPPP7 (#1), PPPP8 (#1, #2) |

In Table (3), the PPPP group corresponding to one CC includes two PPPPs, the parameter T2 of the resource selection window is 20 ms, the number of CCs corresponding to PPPP1-PPPP8 is $(n_1,n_2,n_3,n_4,n_5,n_6,n_7,n_8) = (8,8,6,6,4,4,2,2)$, and the index offset of the CCs corresponding to PPPP1-PPPP8 is $(l_1,l_2,l_3,l_4,l_5,l_6,l_7,l_8) = (0,0,2,2,4,4,6,6)$.

Table (3)

| CCs Index | PPPP (CBR Threshold Value) | PPPP | Service type |
|---|---|---|---|
| 1 | PPPP1 (0.75), PPPP2 (0.7) | PPPP 1,2 | PPPP1 (#1, #2), PPPP2 (#1, #2) |
| 2 | PPPP1 (0.7), PPPP2 (0.65) | PPPP 1,2 | PPPP1 (#1, #2), PPPP2 (#1, #2) |
| 3 | PPPP1 (0.65), PPPP2 (0.6), PPPP3 (0.75), PPPP4 (0.7) | PPPP 1,2,3,4 | PPPP1 (#1), PPPP2 (#1), PPPP3 (#1,#2), PPPP4 (#1, #2) |
| 4 | PPPP1 (0.6), PPPP2 (0.55), PPPP3 (0.7), PPPP4 (0.65) | PPPP 1,2,3,4 | PPPP1 (#2), PPPP2 (#2), PPPP3 (#1,#2), PPPP4 (#1, #2) |
| 5 | PPPP1 (0.55), PPPP2 (0.5), PPPP3 (0.65), PPPP4 (0.6), PPPP5 (0.75), PPPP6 (0.7) | PPPP 1,2,3,4,5,6 | PPPP1 (#1), PPPP2 (#1), PPPP3 (#1), PPPP4 (#1), PPPP5 (#1, #2), PPPP6 (#1, #2) |
| 6 | PPPP1 (0.5), PPPP2 (0.45), PPPP3 (0.6), PPPP4 (0.55), PPPP5 (0.7), PPPP6 (0.65) | PPPP 1,2,3,4,5,6 | PPPP1 (#2), PPPP2 (#2), PPPP3 (#2), PPPP4 (#2), PPPP5 (#1, #2), PPPP6 (#1, #2) |
| 7 | PPPP1 (0.45), PPPP2 (0.4), PPPP3 (0.55), PPPP4 (0.5), PPPP5 (0.65), PPPP6 (0.6), PPPP7 (0.75), PPPP8 (0.7) | PPPP 1,2,3,4,5,6,7,8 | PPPP1 (#1), PPPP2 (#1), PPPP3 (#1), PPPP4 (#1), PPPP5 (#1), PPPP6 (#1), PPPP7 (#1, #2), PPPP8 (#1, #2) |
| 8 | PPPP1 (0.4), PPPP2 (0.35), PPPP3 (0.5), PPPP4 (0.45), PPPP5 (0.6), PPPP6 (0.55), PPPP7 (0.7), PPPP8 (0.65) | PPPP 1,2,3,4,5,6,7,8 | PPPP1 (#2), PPPP2 (#2), PPPP3 (#2), PPPP4 (#2), PPPP5 (#2), PPPP6 (#2), PPPP7 (#1, #2), PPPP8 (#1, #2) |

In Table (4), the PPPP group corresponding to one CC includes two PPPPs, the parameter T2 of the resource selection window is 10 ms, the number of CCs corresponding to PPPP1-PPPP8 is $(n_1,n_2,n_3,n_4,n_5,n_6,n_7,n_8) = (8,8,6,6,4,4,2,2)$, and the index offset of the CCs corresponding to PPPP1-PPPP8 is $(l_1,l_2,l_3,l_4,l_5,l_6,l_7,l_8) = (0,0,2,2,4,4,6,6)$.

Table (4)

| Indexes of CCs | PPPP (CBR Threshold Value) | PPPP | Service type |
|---|---|---|---|
| 1 | PPPP1 (0.8), PPPP2 (0.75) | PPPP 1,2 | PPPP1 (#1, #2), PPPP2 (#1, #2) |
| 2 | PPPP1 (0.75), PPPP2 (0.7) | PPPP 1,2 | PPPP1(#1, #2), PPPP2(#1, #2) |
| 3 | PPPP1 (0.7), PPPP2 (0.65), PPPP3 (0.8), PPPP4 (0.75) | PPPP 1,2,3,4 | PPPP1 (#1), PPPP2 (#1), PPPP3 (#1, #2), PPPP4 (#1, #2) |
| 4 | PPPP1 (0.65), PPPP2 (0.6), PPPP3 (0.75), PPPP4 (0.7) | PPPP 1,2,3,4 | PPPP1 (#2), PPPP2 (#2), PPPP3 (#1, #2), PPPP4 (#1, #2) |
| 5 | PPPP1 (0.6), PPPP2 (0.55), PPPP3 (0.7), PPPP4 (0.65), PPPP5 (0.8), PPPP6 (0.75) | PPPP 1,2,3,4,5,6 | PPPP1 (#1), PPPP2 (#1), PPPP3 (#1), PPPP4 (#1), PPPP5 (#1, #2), PPPP6 (#1, #2) |
| 6 | PPPP1 (0.55), PPPP2 (0.5), PPPP3 (0.65), PPPP4 (0.6), PPPP5 (0.75), PPPP6 (0.7) | PPPP 1,2,3,4,5,6 | PPPP1 (#2), PPPP2 (#2), PPPP3 (#2), PPPP4 (#2), PPPP5 (#1, #2), PPPP6 (#1, #2) |
| 7 | PPPP1 (0.5), PPPP2 (0.45), PPPP3 (0.6), PPPP4 (0.55), PPPP5 (0.7), PPPP6 (0.65), PPPP7 (0.8), PPPP8 (0.75) | PPPP 1,2,3,4,5,6,7,8 | PPPP1 (#1), PPPP2 (#1), PPPP3 (#1), PPPP4 (#1), PPPP5 (#1), PPPP6 (#1), PPPP7 (#1, #2), PPPP8 (#1, #2) |
| 8 | PPPP1 (0.45), PPPP2 (0.4), PPPP3 (0.55), PPPP4 (0.5), PPPP5 (0.65), PPPP6 (0.6), PPPP7 (0.75), PPPP8 (0.7) | PPPP 1,2,3,4,5,6,7,8 | PPPP1 (#2), PPPP2 (#2), PPPP3 (#2), PPPP4 (#2), PPPP5 (#2), PPPP6 (#2), PPPP7 (#1, #2), PPPP8 (#1, #2) |

In Table (5), the PPPP group corresponding to one CC includes three PPPPs, the parameter T2 of the resource selection window is 20 ms, the number of CCs corresponding to PPPP1-PPPP8 is $(n_1,n_2,n_3,n_4,n_5,n_6,n_7,n_8)$ = (8,8,8,5,5,5,2,2), and the index offset of the CCs corresponding to PPPP1-PPPP8 is $(l_1,l_2,l_3,l_4,l_5,l_6,l_7,l_8)$ = (0,0,0,3,3,3,6,6).

Table (5)

| Indexes of CCs | PPPP (CBR Threshold Value) | PPPP | Service type |
|---|---|---|---|
| 1 | PPPP1 (0.75), PPPP2 (0.7), PPPP3 (0.65) | PPPP 1,2,3 | PPPP1 (#1, #2), PPPP2 (#1, #2), PPPP3 (#1, #2) |
| 2 | PPPP1 (0.7), PPPP2 (0.65), PPPP3 (0.6) | PPPP 1,2,3 | PPPP1 (#1, #2), PPPP2 (#1, #2), PPPP3 (#1, #2) |
| 3 | PPPP1 (0.65), PPPP2 (0.6), PPPP3 (0.55) | PPPP 1,2,3 | PPPP1 (#1, #2), PPPP2 (#1, #2), PPPP3 (#1, #2) |
| 4 | PPPP1 (0.6), PPPP2 (0.55), PPPP3 (0.5), PPPP4 (0.75), PPPP5 (0.7), PPPP6 (0.65) | PPPP 1,2,3,4,5,6 | PPPP1 (#1), PPPP2 (#1), PPPP3 (#1), PPPP4 (#1, #2), PPPP5 (#1, #2), PPPP6 (#1, #2) |
| 5 | PPPP1 (0.55), PPPP2 (0.5), PPPP3 (0.45), PPPP4 (0.7), PPPP5 (0.65), PPPP6 (0.6) | PPPP 1,2,3,4,5,6 | PPPP1 (#2), PPPP2 (#2), PPPP3 (#2), PPPP4 (#1, #2), PPPP5 (#1, #2), PPPP6 (#1, #2) |
| 6 | PPPP1 (0.5), PPPP2 (0.45), PPPP3 (0.4), PPPP4 (0.65), PPPP5 (0.6), PPPP6 (0.55) | PPPP 1,2,3,4,5,6 | PPPP1 (#1), PPPP2 (#1), PPPP3 (#1), PPPP4 (#1, #2), PPPP5 (#1, #2), PPPP6 (#1, #2) |
| 7 | PPPP1 (0.45), PPPP2 (0.4), PPPP3 (0.35), PPPP4 (0.6), PPPP5 (0.55), PPPP6 (0.5), PPPP7 (0.75), PPPP8 (0.7) | PPPP 1,2,3,4,5,6,7,8 | PPPP1 (#2), PPPP2 (#2), PPPP3 (#2), PPPP4 (#1), PPPP5 (#1), PPPP6 (#1), PPPP7 (#1, #2), PPPP8 (#1, #2) |
| 8 | PPPP1 (0.4), PPPP2 (0.35), PPPP3 (0.3), PPPP4 (0.55), PPPP5 (0.5), PPPP6 (0.45), PPPP7 (0.7), PPPP8 (0.65) | PPPP 1,2,3,4,5,6,7,8 | PPPP1 (#1), PPPP2 (#1), PPPP3 (#1), PPPP4 (#2), PPPP5 (#2), PPPP6 (#2), PPPP7 (#1, #2), PPPP8 (#1, #2) |

In Table (6), the PPPP group corresponding to one CC includes three PPPPs, the parameter T2 of the resource selection window is 10 ms, the number of CCs corresponding to PPPP1-PPPP8 is $(n_1,n_2,n_3,n_4,n_5,n_6,n_7,n_8)$ = (8,8,8,5,5,5,2,2), and the index offset of the CCs corresponding to PPPP1-PPPP8 is $(l_1,l_2,l_3,l_4,l_5,l_6,l_7,l_8)$ = (0,0,0,3,3,3,6,6).

Table (6)

| Indexes of CCs | PPPP (CBR Threshold Value) | PPPP | Service type |
|---|---|---|---|
| 1 | PPPP1 (0.8), PPPP2 (0.75), PPPP3 (0.7) | PPPP 1,2,3 | PPPP1 (#1, #2), PPPP2 (#1, #2), PPPP3 (#1, #2) |
| 2 | PPPP1 (0.75), PPPP2 (0.7), PPPP3 (0.65) | PPPP 1,2,3 | PPPP1 (#1, #2), PPPP2 (#1, #2), PPPP3 (#1, #2) |
| 3 | PPPP1 (0.7), PPPP2 (0.65), PPPP3 (0.6) | PPPP 1,2,3 | PPPP1 (#1, #2), PPPP2 (#1, #2), PPPP3 (#1, #2) |
| 4 | PPPP1 (0.65), PPPP2 (0.6), PPPP3 (0.55), PPPP4 (0.8), PPPP5 (0.75), PPPP6 (0.7) | PPPP 1,2,3,4,5,6 | PPPP1 (#1), PPPP2 (#1), PPPP3 (#1), PPPP4 (#1, #2), PPPP5 (#1, #2), PPPP6 (#1, #2) |
| 5 | PPPP1 (0.6), PPPP2 (0.55), PPPP3 (0.5), PPPP4 (0.75), PPPP5 (0.7), PPPP6 (0.65) | PPPP 1,2,3,4,5,6 | PPPP1 (#2), PPPP2 (#2), PPPP3 (#2), PPPP4 (#1, #2), PPPP5 (#1, #2), PPPP6 (#1, #2) |

(continued)

| Indexes of CCs | PPPP (CBR Threshold Value) | PPPP | Service type |
|---|---|---|---|
| 6 | PPPP1 (0.55), PPPP2 (0.5), PPPP3 (0.45), PPPP4 (0.7), PPPP5 (0.65), PPPP6 (0.6) | PPPP 1,2,3,4,5,6 | PPPP1 (#1), PPPP2 (#1), PPPP3 (#1), PPPP4 (#1, #2), PPPP5 (#1, #2), PPPP6 (#1, #2) |
| 7 | PPPP1 (0.5), PPPP2 (0.45), PPPP3 (0.4), PPPP4 (0.65), PPPP5 (0.6), PPPP6 (0.55), PPPP7 (0.8), PPPP8 (0.75) | PPPP 1,2,3,4,5,6,7,8 | PPPP1 (#2), PPPP2 (#2), PPPP3 (#2), PPPP4 (#1), PPPP5 (#1), PPPP6 (#1), PPPP7 (#1, #2), PPPP8 (#1, #2) |
| 8 | PPPP1 (0.45), PPPP2 (0.4), PPPP3 (0.35), PPPP4 (0.6), PPPP5 (0.55), PPPP6 (0.5), PPPP7 (0.75), PPPP8 (0.7) | PPPP 1,2,3,4,5,6,7,8 | PPPP1 (#1), PPPP2 (#1), PPPP3 (#1), PPPP4 (#2), PPPP5 (#2), PPPP6 (#2), PPPP7 (#1, #2), PPPP8 (#1, #2) |

In Table (7), the PPPP group corresponding to one CC includes two PPPPs, the parameter T2 of the resource selection window is 20 ms, the number of CCs corresponding to PPPP1-PPPP8 is $(n_1,n_2,n_3,n_4,n_5,n_6,n_7,n_8) = (4,4,3,3,2,2,1,1)$, and the index offset of the CCs corresponding to PPPP1-PPPP8 is $(l_1,l_2,l_3,l_4,l_5,l_6,l_7,l_8) = (0,0,1,1,2,2,3,3)$.

Table (7)

| Indexes of CCs | PPPP (CBR threshold value) | PPPP | Service type |
|---|---|---|---|
| 1 | PPPP1 (0.75), PPPP2 (0.7) | PPPP 1,2 | PPPP1 (#1, #2), PPPP2 (#1, #2) |
| 2 | PPPP1 (0.7), PPPP2 (0.65), PPPP3 (0.75), PPPP4 (0.7) | PPPP 1,2,3,4 | PPPP1(#1), PPPP2 (#1), PPPP3 (#1, #2), PPPP4 (#1, #2) |
| 3 | PPPP1 (0.65), PPPP2 (0.6), PPPP3 (0.7), PPPP4 (0.65), PPPP5 (0.75), PPPP6 (0.7), | PPPP 1,2,3,4,5,6 | PPPP1 (#2), PPPP2 (#2), PPPP3 (#1), PPPP4 (#1), PPPP5 (#1, #2), PPPP6 (#1, #2) |
| 4 | PPPP1 (0.6), PPPP2 (0.55), PPPP3 (0.65), PPPP4 (0.6), PPPP5 (0.7), PPPP6 (0.65), PPPP7 (0.75), PPPP8 (0.7), | PPPP 1,2,3,4,5,6,7,8 | PPPP1 (#1), PPPP2 (#1), PPPP3 (#2), PPPP4 (#2), PPPP5 (#1), PPPP6 (#1), PPPP7 (#1, #2), PPPP8 (#1, #2) |

In Table (8), the PPPP group corresponding to one CC includes two PPPPs, the parameter T2 of the resource selection window is 10 ms, the number of CCs corresponding to PPPP1-PPPP8 is $(n_1,n_2,n_3,n_4,n_5,n_6,n_7,n_8) = (4,4,3,3,2,2,1,1)$, and the index offset of the CCs corresponding to PPPP1-PPPP8 is $(l_1,l_2,l_3,l_4,l_5,l_6,l_7,l_8) = (0,0,1,1,2,2,3,3)$.

Table (8)

| Indexes of CCs | PPPP (CBR threshold value) | PPPP | Service type |
|---|---|---|---|
| 1 | PPPP1 (0.8), PPPP2 (0.75) | PPPP 1,2 | PPPP1 (#1, #2), PPPP2 (#1, #2) |
| 2 | PPPP1 (0.75), PPPP2 (0.7), PPPP3 (0.8), PPPP4 (0.75) | PPPP 1,2,3,4 | PPPP1(#1), PPPP2 (#1), PPPP3 (#1, #2), PPPP4 (#1, #2) |
| 3 | PPPP1 (0.7), PPPP2 (0.65), PPPP3 (0.75), PPPP4 (0.7), PPPP5 (0.8), PPPP6 (0.75), | PPPP 1,2,3,4,5,6 | PPPP1 (#2), PPPP2 (#2), PPPP3 (#1), PPPP4 (#1), PPPP5 (#1, #2), PPPP6 (#1, #2) |
| 4 | PPPP1 (0.65), PPPP2 (0.6), PPPP3 (0.7), PPPP4 (0.65), PPPP5 (0.75), PPPP6 (0.7), PPPP7 (0.8), PPPP8 (0.75), | PPPP 1,2,3,4,5,6,7,8 | PPPP1 (#1), PPPP2 (#1), PPPP3 (#2), PPPP4 (#2), PPPP5 (#1), PPPP6 (#1), PPPP7 (#1, #2), PPPP8 (#1, #2) |

In Table (9), the PPPP group corresponding to one CC includes two PPPPs, the parameter T2 of the resource selection window is 20 ms, the number of CCs corresponding to PPPP1-PPPP4 is $(n_1, n_2, n_3, n_4) = (8,8,4,4)$, and the index offset of the CCs corresponding to PPPP1-PPPP4 is $(l_1, l_2, l_3, l_4) = (0,0,4,4)$.

Table (9)

| Indexes of CCs | PPPP (CBR threshold value) | PPPP | Service type |
|---|---|---|---|
| 1 | PPPP1 (0.75), PPPP2 (0.7) | PPPP 1,2 | PPPP1 (#1, #2), PPPP2 (#1, #2) |
| 2 | PPPP1 (0.7), PPPP2 (0.65) | PPPP 1,2 | PPPP1 (#1, #2), PPPP2 (#1, #2) |
| 3 | PPPP1 (0.65), PPPP2 (0.6) | PPPP 1,2 | PPPP1 (#1, #2), PPPP2 (#1, #2) |
| 4 | PPPP1 (0.6), PPPP 2 (0.55) | PPPP 1,2 | PPPP1 (#1, #2), PPPP2 (#1, #2) |
| 5 | PPPP1 (0.55), PPPP2 (0.5), PPPP3 (0.75), PPPP4 (0.7) | PPPP 1,2,3,4 | PPPP1 (#1), PPPP2 (#1), PPPP3 (#1, #2), PPPP4 (#1, #2) |
| 6 | PPPP1 (0.5), PPPP2 (0.45), PPPP3 (0.7), PPPP4 (0.65) | PPPP 1,2,3,4 | PPPP1 (#2), PPPP2 (#2), PPPP3 (#1, #2), PPPP4 (#1, #2) |
| 7 | PPPP1 (0.45), PPPP2 (0.4), PPPP3 (0.65), PPPP4 (0.6) | PPPP 1,2,3,4 | PPPP1 (#1), PPPP2 (#1), PPPP3 (#1, #2), PPPP4 (#1, #2) |
| 8 | PPPP1 (0.4), PPPP2 (0.35), PPPP3 (0.6), PPPP4 (0.55) | PPPP 1,2,3,4 | PPPP1 (#2), PPPP2 (#2), PPPP3 (#1, #2), PPPP4 (#1, #2) |

In Table (10), the PPPP group corresponding to one CC includes two PPPPs, the parameter T2 of the resource selection window is 10 ms, the number of CCs corresponding to PPPP1-PPPP4 is $(n_1, n_2, n_3, n_4) = (8,8,4,4)$, and the index offset of the CCs corresponding to PPPP1-PPPP4 is $(l_1, l_2, l_3, l_4) = (0,0,4,4)$.

Table (10)

| Indexes of CCs | PPPP (CBR Threshold Value) | PPPP | Service type |
|---|---|---|---|
| 1 | PPPP1 (0.8), PPPP2 (0.75) | PPPP 1,2 | PPPP1 (#1, #2), PPPP2 (#1, #2) |
| 2 | PPPP1 (0.75), PPPP2 (0.7) | PPPP 1,2 | PPPP1 (#1, #2), PPPP2 (#1, #2) |
| 3 | PPPP1 (0.7), PPPP2 (0.65) | PPPP 1,2 | PPPP1 (#1, #2), PPPP2 (#1, #2) |
| 4 | PPPP1 (0.65), PPPP2 (0.6) | PPPP 1,2 | PPPP1 (#1, #2), PPPP2 (#1, #2) |
| 5 | PPPP1 (0.6), PPPP2 (0.55), PPPP3 (0.8), PPPP4 (0.75) | PPPP 1,2,3,4 | PPPP1 (#1), PPPP2 (#1), PPPP3 (#1, #2), PPPP4 (#1, #2) |
| 6 | PPPP1 (0.55), PPPP2 (0.5), PPPP3 (0.75), PPPP4 (0.7) | PPPP 1,2,3,4 | PPPP1 (#2), PPPP2 (#2), PPPP3 (#1, #2), PPPP4 (#1, #2) |
| 7 | PPPP1 (0.5), PPPP2 (0.45), PPPP3 (0.7), PPPP4 (0.65) | PPPP 1,2,3,4 | PPPP1 (#1), PPPP2 (#1), PPPP3 (#1, #2), PPPP4 (#1, #2) |
| 8 | PPPP1 (0.45), PPPP2 (0.4), PPPP3 (0.65), PPPP4 (0.6) | PPPP 1,2,3,4 | PPPP1 (#2), PPPP2 (#2), PPPP3 (#1, #2), PPPP4 (#1, #2) |

Table (10) is taken as an example, and it is assumed that the UE 100 is set to correspond to the fourth PPPP (i.e., PPPP4), and the measurement values of the channel statuses (referring to the CBRs in this example) calculated by the processor 160 for all the CCs are 0.68. It can be learned from Table (10) that the fourth PPPP corresponds to the fifth, the sixth, the seventh, and the eighth CCs, and the corresponding CBR threshold values are 0.75, 0.7, 0.65, and 0.6, respectively. Since the measurement values of the channel statuses (0.68 and 0.68, respectively) for the fifth CC and the sixth CC corresponding to PPPP4 are both less than the corresponding CBR threshold values (0.75 and 0.7, respectively), the fifth CC and the sixth CC can be determined as the candidate CCs of the UE 100. The measurement values of the channel statuses (0.68 and 0.68, respectively) for the seventh CC and the eighth CC corresponding to PPPP4 are both greater than the corresponding CBR threshold values (0.65 and 0.6, respectively), and thus the seventh CC and the eighth CC cannot be determined as the candidate CCs of the UE 100.

The processor 160 then selects at least one of the candidate CCs as at least one selected usable CC and performs a resource sensing and selection process on the at least one selected usable CC through the receiver 120 (step S350). In an embodiment, the processor 160 can determine at least one selected usable CC from all the CCs according to the priority order of the candidate CCs and a capability of the UE 100. According to the present embodiment, the smaller the index of the CC corresponding to each PPPP, the higher the priority of the CC. For instance, the priority of the first CC is higher than the priority of the second CC. The capability of the UE 100 are associated with the number of the CCs which can be supported by the UE 100 (including the transmitting end, the receiving end, or both) at the same time, the supported frequency band, whether CA is supported, allowable bandwidth, and/or other parameters.

FIG. 6 is a schematic view of selection of selected usable CCs according to an embodiment of the disclosure. With reference to FIG. 6, it is assumed that the UE 100 has determined the candidate CCs are the first CC to the fourth CC after the steps S310 and S330, and that the capability of the UE 100 is data transmission with use of two CCs. As such, the processor 160 selects two CCs with the highest priority (i.e., the first CC and the second CC) as the selected usable CCs.

In another embodiment, if the UE 100 is capable of transmitting data with use of a certain number of CCs at the same time, and the certain number of CCs is greater than or equal to the number of the candidate CCs obtained after the step S330, the processor 160 directly determines all of the candidate CCs as the selected usable CCs.

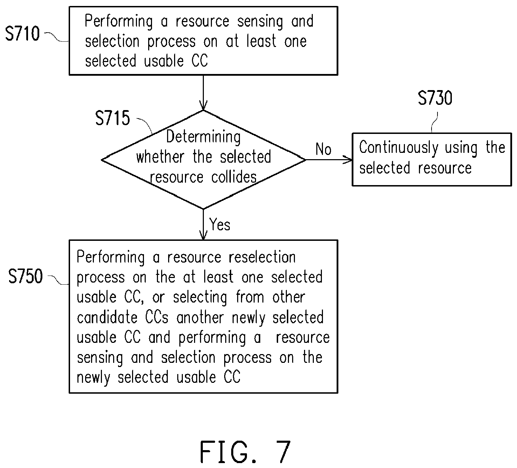

After the selected usable CCs are determined, please refer to FIG. 7, which is a flowchart illustrating a resource sensing and selection process performed on a selected usable CC according to an embodiment of the disclosure. The processor 160 performs the resource sensing and selection process on at least one selected usable CC through the receiver 120 (step S710). That is, it is not necessary to perform the resource sensing and selection process on other CCs that are not selected usable CCs. As to the resource sensing process performed on each selected usable CC, a resource of each selected usable CC is divided into multiple resource units (RUs) according to time and/or frequency, wherein the size of each resource unit (RU) is determined by the upper layer, and each RU includes at least one resource block (RB). In an embodiment, the processor 160 is capable of determining idle resource unit (RU) in each selected usable CC according to resource occupancy information. The resource occupancy information is related to resource allocation information for data transmission, and the idle RU is a candidate resource configured for resource selection. For instance, the processor 160 is able to receive a scheduling assignment message (SA message) through the receiver 120 and analyze the SA message to obtain the resource occupancy information. Here, the SA message is configured to indicate when the resource and which part of the resource is used to transmit data, and the SA message may also be a physical sidelink control channel (PSCCH) message. The obtained resource occupancy information is, for instance, a resource configured or scheduled for data transmission and a resource pattern for data transmission.

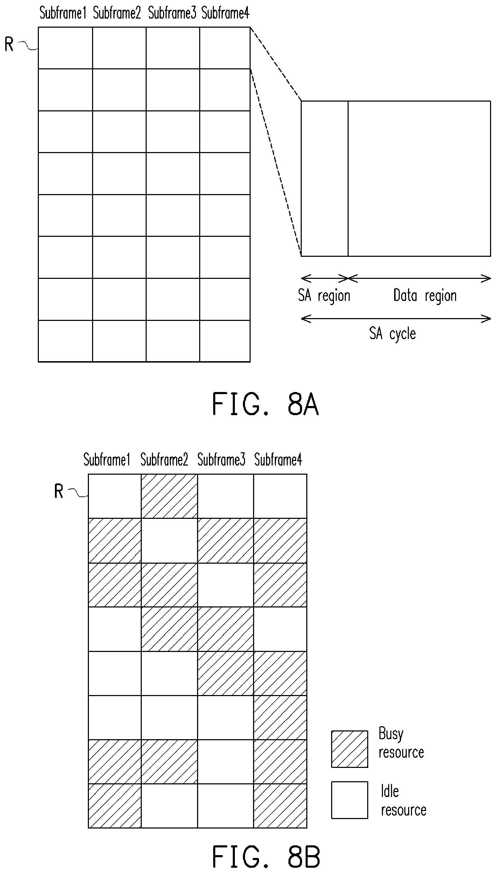

FIG. 8A to FIG. 8D are schematic views of a resource sensing process according to an embodiment of the disclosure. With reference to FIG. 8A, on the left side, the resource R is divided into several SA period resource regions based on time (e.g., subframes) and frequency, wherein the SA period resource region is comprised of multiple RUs, each RU includes at least one RB, and the number and the size of the RBs are determined by the upper layer. The processor 160 analyzes the SA message and can then obtain the time resource pattern of transmission (T-RPT), for instance, and the T-RPT includes resource location information of data transmission. On the right side of FIG. 8A, the format of the SA period resource region is illustrated, and one SA period resource region is divided into a SA region and a data region. The SA region records the T-RPT, and the data region carries the data to be transmitted. The processor 160 may, through receiving and analyzing the resource SA message in the SA region of each SA period resource region, determine whether the RUs in the data region are busy RUs or idle RUs. As shown in FIG. 8B, the busy RUs are occupied RUs or scheduled for data transmission, and the idle RUs are non-occupied RUs or not scheduled for data transmission.

If the resource location of the SA region and the data region shown in FIG. 8A is pre-configured (that is, the resource location of the SA region and the data region corresponding to each UE is fixed and known to other UEs in advance), an idle resource region, a decodable resource region, and a collision resource region may be determined as described below. As to the determination of the idle resource region, if the signal strength of the SA region is smaller than the preset threshold value, and the processor 160 cannot decode the T-RPT information, the processor 160 determines that the SA region and the corresponding data region are the idle resource region (for instance, the information field is indicated by "00"). As to the determination of the decodable resource region in the busy resource region, if the signal strength of the SA region is greater than the preset threshold value, and the processor 160 can decode the T-RPT information, the processor 160 determines that the SA region and the corresponding data region are the decodable resource region (for instance, the information field is indicated by "01"). As to the determination of the collision resource region in the busy resource region, if the signal strength of the SA region is greater than the preset threshold value, and the processor 160 cannot decode the T-RPT information, the processor 160 determines that the SA region and the corresponding data region are the collision resource region (for instance, the information field is indicated by "10").

On the other hand, if the resource location of the SA region and the data region shown in FIG. 8A is not pre-configured (that is, the resource location of the SA region and the data region corresponding to each UE is not fixed and unknown to other UEs in advance), the idle resource region, the decodable resource region, and the collision resource region may be determined as described below. As to the determination of the idle resource region, the difference between the previous embodiment disclosing the resource location is configured and the present embodiment disclosing the resource location is not configured lies in that only the SA region is determined to be the idle resource region according to the present embodiment. The determination of the decodable resource region in the busy resource region is the same in the previous and the present embodiments. As to the determination of the collision resource region in the busy resource region, the difference between the previous embodiment disclosing the resource location is configured and the present embodiment disclosing the resource location is not configured lies in that only the SA region is determined to be the collision resource region according to the present embodiment.

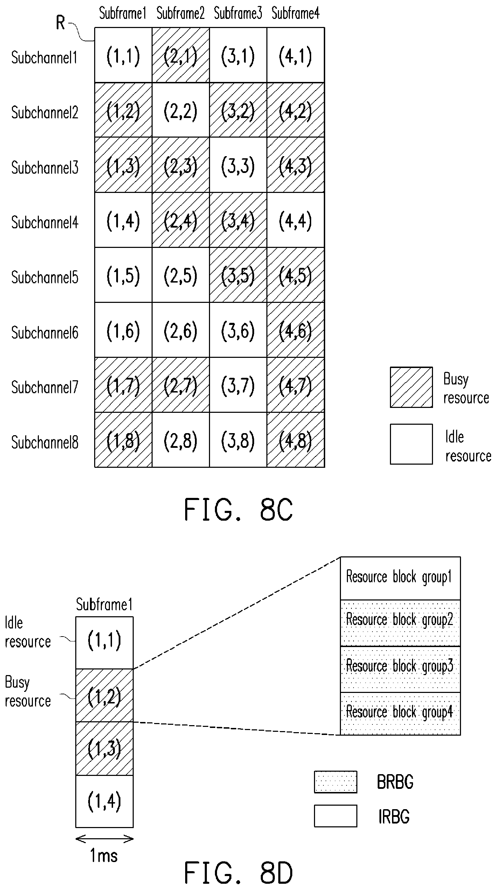

In another embodiment, the resource sensing process is divided into two stages: the first stage is based on a subchannel resource, and the second stage is based on a resource block group (RBG). As to the first-sage resource sensing process based on the subchannel resource, a resource of each selected usable CC is divided into multiple subchannel resources according to time and/or frequency, wherein the size of the subchannel resources is determined by the upper layer, and each subchannel resource includes at least one RBG. The processor 160 receives signals through the receiver 120 and measures the strength of the signals of all subchannel resources in each selected usable CC. According to a first energy threshold value (which may be determined in advance or dynamically adjusted according to the average power of background noise), the processor 160 determines statuses of all subchannel resources in each selected usable CC. In response to the energy (average or in certain segment) obtained by measuring a certain subchannel resource in a certain selected usable CC being smaller than or equal to the first energy threshold value, the processor 160 determines that the subchannel resource is an idle subchannel resource, and the idle subchannel resource is a candidate resource configured for resource selection. In response to the energy obtained by measuring the subchannel resource being greater than the first energy threshold value, the processor 160 determines that the subchannel resource is not the idle subchannel resource but a busy subchannel resource. As shown in FIG. 8C, the resource R may be divided into busy subchannel resources and idle subchannel resources. The location of each subchannel resource may be distinguished by different location information (in FIG. 8C, coordinates are taken as an example, and (1,1) represent subchannel 1 of subframe 1).

As to the second-stage resource sensing process based on the RBG, for accuracy, the processor 160 further divides the busy subchannel resources (e.g., the busy resources shown in FIG. 8C) determined in the first stage into several RBGs according to time and/or frequency, and the number of RBGs in a busy subchannel resource is set by the upper layer. The processor 160 then receives signals of all RBGs in each busy subchannel resource from the receiver 120 and measures the strength of the signals. According to a second energy threshold, the processor 160 determines the statuses of all RBGs in each busy subchannel resource. In response to the energy (average or in certain segment) obtained by measuring a certain RBG in a certain busy subchannel resource being smaller than or equal to the second energy threshold value, the processor 160 determines that the RBG is an idle resource block (IRB) group (IRBG). In response to the energy obtained by measuring the RBG being greater than the second energy threshold, the processor 160 determines that the RBG is not an IRBG but a busy resource block (BRB) group (BRBG).

As exemplarily shown in FIG. 8D, one busy subchannel resource may be divided into four RBGs 1-4. The processor 160, based on the second energy threshold, determines whether the four RBGs 1-4 are IRBGs or BRBGs. According to the determination, RBG 1 is an IRBG (corresponding to the idle resource), and RBGs 2-4 are BRBGs (corresponding to the busy resources).

In an embodiment, as to the busy resources, the processor 160 may further determine whether the BRBGs are decodable resource regions or collision resource regions according to a third energy threshold (which may be determined in advance or dynamically adjusted according to the energy threshold value used in the SA decoding process). In response to the energy (average or in certain segment) obtained by measuring a certain BRBG being smaller than or equal to the third energy threshold value, the processor 160 determines that the BRBG is a decodable resource region. In response to the energy obtained by measuring the BRBG being greater than the third energy threshold value, the processor 160 determines that the BRBG is a collision resource region.

In still another embodiment of resource sensing, the processor 160 may combine the resource occupancy information-based resource sensing method and the two-stage energy measurement resource sensing method as described above and compare the resource status indications (including whether the resource is occupied, decodable, or idle) obtained by applying said two methods in conjunction with weight coefficients (e.g., determine whether the results obtained by applying the two methods are the same), so as to obtain a more reliable and accurate hybrid resource indication. For instance, if the resource location of the SA region and the data region is pre-configured, the resource status indication obtained by applying the resource occupancy information-based resource sensing method will give higher weight coefficients to the decodable resource region and the collision resource region. If the resource location of the SA region and the data region is not pre-configured, the resource status indication obtained by applying the resource occupancy information-based resource sensing method will give higher weight coefficients to the decodable resource region.

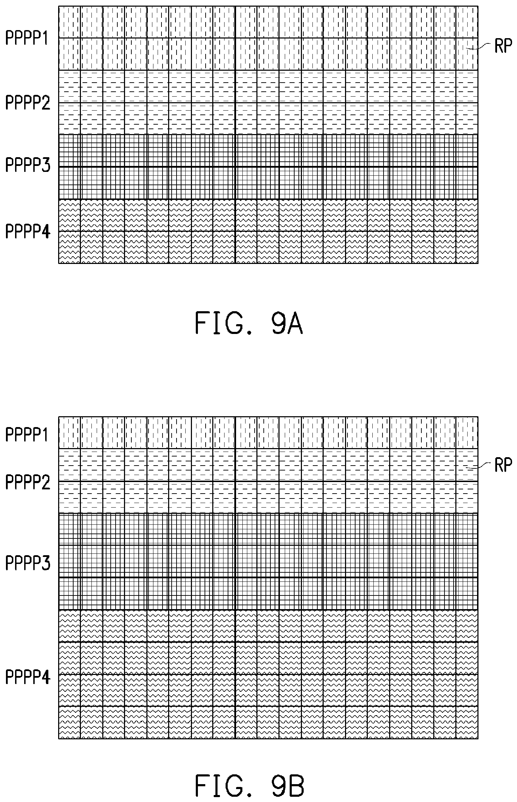

A resource pool (RP) corresponding to each selected usable CC may be determined based on the corresponding PPPP. In an embodiment, the processor 160 may equally or unequally divide the RP (e.g., the resource R shown in FIG. 8B and FIG. 8C) corresponding to the selected usable CC) according to PPPPs. FIG. 9A and FIG. 9B are schematic views exemplarily illustrating division of a resource pool, respectively. With reference to FIG. 9A, it is assumed that there are the first PPPP to the fourth PPPP (i.e., PPPP1-PPPP4), and the processor 160 equally divides the resource pool RP into four equal parts allocated to the UEs 100 respectively having the four different PPPPs. Namely, the UEs 100 merely perform the resource sensing and selection process on one part of the resources corresponding to their PPPPs.

In another embodiment, the processor 160 may unequally divide the resource pool (e.g., the resource R shown in FIG. 8B and FIG. 8C) corresponding to each selected usable CC into unequal parts according to the channel status threshold values corresponding to the PPPPs. With reference to FIG. 9B, it is assumed that there are the first PPPP to the fourth PPPP (i.e., PPPP1-PPPP4), and the ratio of the channel status threshold values is 0.2:0.4:0.6:0.8. The processor 160 divides the resource pool RP into four resource parts according to said ratio of 1:2:3:4, and the four resource parts are respectively allocated to PPPP1-PPPP4. In other words, the four resource parts are respectively allocated to the UEs 100 respectively having the four different PPPPs. Namely, the UEs 100 merely perform the resource sensing and selection process on the resource part corresponding to their PPPPs.

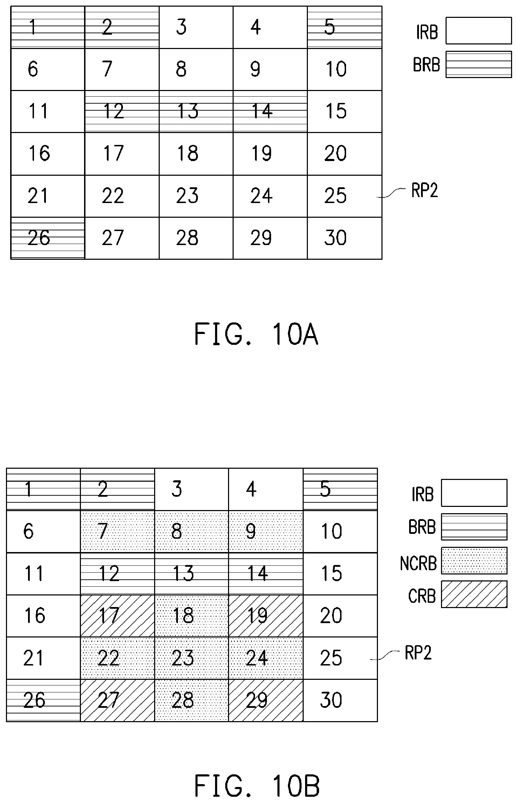

As to resource selection, the processor 160 may sequentially assign a corresponding location number to each RU in the selected usable CC, wherein the size of the RU is determined by the upper layer, and each RU includes at least one RB. FIG. 10A and FIG. 10B are schematic views exemplarily illustrating resource selection and resource re-selection. With reference to FIG. 10A, it is assumed the RU includes one RB, each RB in a resource pool RP2 is preset, all UEs are aware of their corresponding location numbers, and the location numbers are continuous and not repetitive. After resource sensing, the processor 160 obtains the resource location corresponding to the BRB (the corresponding set of busy resource location numbers is{1, 2, 5 ,12, 13, 14, 26}) and the resource location corresponding to the IRB (the corresponding set of idle resource location numbers is {3, 4, 6 ,7, 8, 9, 10, 11, 15, 16, 17, 18, 19, 20, 21, 22, 23, 24, 25, 27, 28, 29, 30}).

The processor 160 randomly performs the initial resource selection process or the resource reselection process on one of the IRBs (e.g., the IRBs shown in FIG. 10A) corresponding to one of the resource location numbers of the IRBs. For instance, the processor 160 selects a location number from the aforesaid set of idle resource location numbers, performs data transmission at the IRB corresponding to the selected location number, and determines whether the selected resource collides (step S715). If the selected resource does not collide then no resource collision occurring, the processor 160 continues to periodically perform data transmission with use of the corresponding selected resource in a semi-persistent scheduling manner (step S730). As exemplarily shown in FIG. 10B, the non-collided resource block (NCRB) is selected by one single UE 100, and the UEs 100 selecting the NCRBs can continue to perform data transmission with use of the corresponding selected resources.

If the selected resource collides, the processor 160 determines to perform the next resource reselection process on all idle resources or all collided resources sensed in the next resource sensing process according to the value of the location number corresponding to the corresponding resource selected in the initial resource selection process or the resource reselection process. The collision of the selected resource indicates that the resource is simultaneously selected by at least two UEs 100 during resource selection or reselection process. As exemplarily shown in FIG. 10B, the collided resource block (CRB) is selected by at least two UEs 100 at the same time. In an embodiment, the UEs 100 encountering the collision issue during resource selection again sense the resources in the next resource sensing process and again determine whether the resource is a BRB, an IRB, or a CRB as well as determine the number of UEs 100 simultaneously selecting the CRB in each CRB. Next, the UEs 100 encountering the collision issue during resource selection perform resource reselection. The UEs 100 encountering the collision issue and selecting the resources with the smaller location numbers in the previous resource selection process again perform said resource reselection on all CRBs, i.e., randomly perform resource selection on one CRB corresponding to one of the location numbers of the CRBs. On the other hand, the UEs 100 encountering the collision issue and selecting the resources with the larger location numbers in the previous resource selection process and/or new UEs 100 performing the resource selection for the first time perform the resource selection not on all CRBs but on all IRBs, i.e., randomly perform resource selection on one IRB corresponding to one of the location numbers of the IRBs. Thereby, different types of UEs 100 may select different types of RBs, so as to reduce the probability of collision during resource selection and enhance reliability.

As exemplarily shown in FIG. 10B, it is assumed that two UEs 100 encounter the collision issue at the RB having the location number 17 during the previous resource selection, another two UEs 100 encounter the collision issue at the RB having the location number 19 during the previous resource selection, another three UEs 100 encounter the collision issue at the RB having the location number 27 during the previous resource selection, and the other three UEs 100 encounter the collision issue at the RB having the location number 29 during the previous resource selection. At the next resource selection period, the two UEs 100 encountering the collision issue at the RB having the location number 17 (smaller than the location numbers 19, 27, and 29 corresponding to the other three CRBs) during the previous resource selection randomly select any of the CRBs corresponding to the location numbers 17, 19, 27, and 29 in the resource reselection process, and the other eight UEs 100 encountering the collision issue during the previous resource selection randomly select any of the IRBs corresponding to the location numbers 3, 4, 6, 10, 11, 15, 16, 20, 21, 25, and 30 in the resource reselection process.

Note that the determination of the value of the location number is based on the threshold value of the location number which is associated with the number of all IRBs or CRBs. For example, in the previous embodiment, the threshold value of the location number is half the number of all CRBs and is thus two, and the two UEs 100 encountering the collision issue and selecting the smallest location number would select any one of the four CRBs corresponding to the location numbers 17, 19, 27, and 29 randomly. Besides, in other embodiments, the UEs 100 selecting the smaller location numbers may randomly select the idle resources, and the UEs 100 selecting the larger location numbers may randomly select the collided resources.

In addition to the resource reselection process performed on the same selected usable CCs, in response to the number of times of collisions exceeding a threshold value (e.g., the number of times is 3, 5, or 7) when the resource selection process is performed on a first selected usable CC, the processor 160 performs a resource sensing and selection process on another newly selected usable component carrier (CC) different from the first selected usable CC (step S750), and the resource sensing and selection process on the first selected usable CC is stopped. Here, the newly selected usable CC is selected from one of the other candidate CCs having the highest priority. As exemplarily shown in FIG. 6, the UE 100 originally selects the first CC and the second CC from four candidate CCs as the selected usable CCs. However, for instance, if the number of times of collisions exceeds the threshold value (e.g., 5 times) when the UE 100 performs the resource selection process on a second selected usable CC, the UE 100 selects another one of the candidate CCs having the highest priority (e.g., the third CC) according to the priority order as the newly selected usable CC, and the resource sensing and selection process is then performed on the newly selected usable CC.

To sum up, improvement of V2X mode 4 is described according to the UE and the resource sensing and selection method provided in one or more embodiments of the disclosure. Based on its PPPP, the UE obtains the channel status threshold value corresponding to each of the CCs and to its PPPP through looking up the channel usage threshold-PPPP mapping table set by the upper layer, and the measurement value of the channel status for the corresponding CC is compared with the corresponding channel status threshold value, so as to determine the candidate CC. Next, according to the capability of the UE and the priority order of the CCs, at least one of the candidate CCs is selected as at least one selected usable CC on which the resource sensing and selection process is simultaneously performed. As to resource sensing, the location information of the busy resources and the idle resources may be obtained according to the resource occupancy information, energy measurement, or the combination thereof. As to resource selection, if the selected resource encounters collision, the resource reselection is performed on all idle resources or all collided resources sensed in the next resource sensing process according to the location number corresponding to the corresponding resource selected in the initial resource selection process or the resource reselection process.

**Claims**

1. A resource sensing and selection method, adapted to a user equipment (100), and **characterized by** comprising:

   measuring and obtaining channel statuses for all of a plurality of component carriers;
   determining candidate component carriers from all the component carriers according to measurement values of the channel statuses for all the component carriers and a ProSe Per-packet Priority (PPPP) (PPPP1, PPPP2, PPPP3, PPPP4) corresponding to the user equipment (100, 100'), wherein number of the candidate component carriers is an integer greater than or equal to zero; and
   selecting at least one of the candidate component carriers as at least one selected usable component carrier and performing a resource sensing and selection process on the at least one selected usable component carrier.

2. The resource sensing and selection method according to claim 1, **characterized in that** the step of determining the candidate component carriers further comprises:

   comparing measurement value of the channel status for each of the component carriers with a channel status threshold value corresponding to the PPPP (PPPP1, PPPP2, PPPP3, PPPP4) and to each of the component carriers;
   in response to the measurement value of the channel status for a first component carrier of the component carriers being smaller than the corresponding channel status threshold value, taking the first component carrier as one of the candidate component carriers; and
   in response to the measurement value of the channel status for the first component carrier being greater than or equal to the corresponding channel status threshold value, not taking the first component carrier as one of the candidate component carriers.

3. The resource sensing and selection method according to claim 2, **characterized in that** the step of comparing the measurement value of the channel status for each of the component carriers with the channel status threshold value corresponding to the PPPP (PPPP1, PPPP2, PPPP3, PPPP4) and to each of the component carriers further comprises:

> obtaining a channel status threshold value-PPPP mapping table, wherein the channel status threshold value-PPPP mapping table records channel status threshold values corresponding to all of the PPPPs (PPPP1, PPPP2, PPPP3, PPPP4) and to all of the component carriers; and
> comparing the measurement value of the channel status corresponding to the PPPP (PPPP1, PPPP2, PPPP3, PPPP4) of the user equipment (100) and to each of the component carriers with the channel status threshold value corresponding to the same PPPP (PPPP1, PPPP2, PPPP3, PPPP4) and to the same one of the component carriers in the channel status threshold value-PPPP mapping table.

4. The resource sensing and selection method according to claim 3, **characterized in that** all of the PPPPs (PPPP1, PPPP2, PPPP3, PPPP4) recorded in the channel status threshold value-PPPP mapping table comprise corresponding indexes arranged according to a priority order.

5. The resource sensing and selection method according to claim 4, wherein as to numbers of the component carriers corresponding to all of the PPPPs (PPPP1, PPPP2, PPPP3, PPPP4) recorded in the channel status threshold value-PPPP mapping table, the number of the component carriers corresponding to a PPPP (PPPP1, PPPP2, PPPP3, PPPP4) with higher priority in the priority order is greater than or equal to the number of the component carriers corresponding to a PPPP (PPPP1, PPPP2, PPPP3, PPPP4) with lower priority in the priority order.

6. The resource sensing and selection method according to claim 4, **characterized in that** the component carriers corresponding to each of the PPPPs (PPPP1, PPPP2, PPPP3, PPPP4) recorded in the channel status threshold value-PPPP mapping table comprise corresponding indexes arranged according to a second priority order.

7. The resource sensing and selection method according to claim 6, **characterized in that**
as to the second priority order of the component carriers corresponding to each of the PPPPs (PPPP1, PPPP2, PPPP3, PPPP4) recorded in the channel status threshold value-PPPP mapping table, the index of a component carrier with higher priority in the second priority order is smaller than or equal to the index of a component carrier with lower priority in the second priority order; and
as to the indexes with a foremost order arranged in the second priority order among the indexes of the component carriers corresponding to all of the PPPPs (PPPP1, PPPP2, PPPP3, PPPP4), the index with the foremost order in the component carriers corresponding to a PPPP (PPPP1, PPPP2, PPPP3, PPPP4) with higher priority in the priority order is smaller than or equal to the index with the foremost order in the component carriers corresponding to a PPPP (PPPP1, PPPP2, PPPP3, PPPP4) with lower priority in the priority order.

8. The resource sensing and selection method according to claim 4, **characterized in that** in each of the component carriers, the channel status threshold values corresponding to all the PPPPs (PPPP1, PPPP2, PPPP3, PPPP4) recorded in the channel status threshold value-PPPP mapping table differ from each other.

9. The resource sensing and selection method according to claim 3, **characterized in that** in each of the PPPPs (PPPP1, PPPP2, PPPP3, PPPP4), the channel status threshold values corresponding to all the component carriers recorded in the channel status threshold value-PPPP mapping table differ from each other.

10. The resource sensing and selection method according to claim 8, **characterized in that** in all of the component carriers, as to the channel status threshold values corresponding to each of the PPPPs (PPPP1, PPPP2, PPPP3, PPPP4) recorded in the channel status threshold value-PPPP mapping table, the channel status threshold value corresponding to a component carrier having smaller index is greater than the channel status threshold value corresponding to a component carrier having larger index.

11. The resource sensing and selection method according to claim 3, **characterized in that** the channel status threshold value corresponding to one of the component carriers recorded in the channel status threshold value-PPPP mapping table corresponding to a first resource selection window is greater than the channel status threshold value corresponding to the same one of the component carriers recorded in the channel status threshold value-PPPP mapping table corresponding to a second resource selection window, and a time length of the first resource selection window is shorter than a time length of the second resource selection window.

12. The resource sensing and selection method according to claim 3, **characterized in that** all of the PPPPs (PPPP1, PPPP2, PPPP3, PPPP4) recorded in the channel status threshold value-PPPP mapping table correspond to at least one service type, and a priority of the at least one service type is the same.

13. The resource sensing and selection method according to claim 2, **characterized in that** a measurement value of each of the channel statuses is a channel busy ratio (CBR).

14. The resource sensing and selection method according to claim 1, **characterized in that** the step of obtaining the measurement values of channel statuses for all of the component carriers further comprises:

dividing a sensing window (SW) according to at least one measurement period (MP1, MP2, MP3, MP4); and measuring and obtaining the measurement values of the channel statuses for all of the component carriers in the at least one measurement period (MP1, MP2, MP3, MP4).

15. The resource sensing and selection method according to claim 1, **characterized in that** the step of selecting at least one of the candidate component carriers as the at least one selected usable component carrier further comprises:

selecting at least one of the candidate component carriers as the at least one selected usable component carrier according to a priority order of the candidate component carriers and a capability of the user equipment (100); and performing the resource sensing and selection process on the at least one selected usable component carrier.

16. The resource sensing and selection method according to claim 1, **characterized in that** the step of performing the resource sensing and selection process on the at least one selected usable component carrier further comprises:

dividing a resource (R) of each of the at least one selected usable component carrier into a plurality of resource units (RU) according to time and/or frequency, wherein a size of each of the plurality of resource units (RU) is determined by an upper layer (163), and each of the plurality of resource units (RU) comprises at least one resource block (RB); and determining at least one idle resource unit in each of the at least one selected usable component carrier according to resource occupancy information, wherein the resource occupancy information is related to a resource allocation information for data transmission, and the at least one idle resource unit is a candidate resource configured for resource selection.

17. The resource sensing and selection method according to claim 16, **characterized in that** the step of determining the at least one idle resource unit in each of the at least one selected usable component carrier according to the resource occupancy information further comprises:
obtaining the resource occupancy information from at least one scheduling assignment (SA) message.

18. The resource sensing and selection method according to claim 1, **characterized in that** the step of performing the resource sensing and selection process on the at least one selected usable component carrier further comprises:

dividing a resource (R) of each of the at least one selected usable component carrier into a plurality of subchannel resources according to time and/or frequency, wherein each of the plurality of subchannel resources comprises at least one resource block group; determining a status of each of the plurality of subchannel resources in each of the at least one selected usable component carrier according to an energy threshold value; in response to an energy obtained by measuring a first subchannel resource in one of the at least one selected usable component carrier being smaller than or equal to the energy threshold value, determining the first subchannel resource is an idle subchannel resource, wherein the idle subchannel resource is a candidate resource configured for resource selection; and in response to the energy obtained by measuring the first subchannel resource being greater than the energy threshold value, determining the first subchannel resource is a busy subchannel resource.

19. The resource sensing and selection method according to claim 18, **characterized in that** the step of performing the resource sensing and selection process on the at least one selected usable component carrier further comprises:

determining each busy subchannel resource in each of the at least one selected usable component carrier;
dividing each busy subchannel resource into a plurality of resource block groups according to time and/or frequency;
determining a status of each of the plurality of resource block groups according to a second energy threshold value;
in response to an energy obtained by measuring a first resource block group in the busy subchannel resources being smaller than or equal to the second energy threshold value, determining the first resource block group is an idle resource block group (IRBG), wherein the idle resource block group (IRBG) is a candidate resource configured for resource selection; and
in response to the energy obtained by measuring the first resource block group being greater than the second energy threshold value, determining the first resource block group is not the idle resource block group (IRBG).

20. The resource sensing and selection method according to claim 1, **characterized in that** the step of performing the resource sensing and selection process on the at least one selected usable component carrier further comprises: performing a resource reselection process on idle resources in each of the at least one selected usable component carrier according to previous information, wherein the previous information is a resource selection result performed previously on each of the at least one selected usable component carrier, and the resource selection result is associated with collision during resource selection.

21. The resource sensing and selection method according to claim 20, **characterized in that** the step of performing the resource sensing and selection process on the at least one selected usable component carrier further comprises:

sequentially allocating a corresponding location number to each of resource units (RU) in the at least one selected usable component carrier, wherein a size of each of the resource units (RU) is configured by an upper layer (163), and each of the resource units (RU) comprises at least one resource block (RB); and
randomly performing an initial resource selection process on one of idle resource units corresponding to one of the location numbers.

22. The resource sensing and selection method according to claim 21, **characterized by** further comprising:

in response to no resource collision occurring during the initial resource selection process or the resource reselection process, continuously performing data transmission by using a corresponding resource selected in the initial resource selection process or the resource reselection process; and
in response to resource collision occurring during the initial resource selection process or the resource reselection process, performing the next resource reselection process on all idle resources or all collided resources sensed in the next resource sensing process according to a value of the location number corresponding to the corresponding resource (R) selected in the initial resource selection process or the resource reselection process, wherein one of the collided resources indicates that a resource unit (RU) is simultaneously selected by at least two of the user equipment (100) during the resource selection or reselection process.

23. The resource sensing and selection method according to claim 1, **characterized in that** the step of performing the resource sensing and selection process on the at least one selected usable component carrier further comprises: equally or unequally dividing a resource pool (RP, RP2) corresponding to the at least one selected usable component carrier according to corresponding PPPPs (PPPP1, PPPP2, PPPP3, PPPP4).

24. The resource sensing and selection method according to claim 1, **characterized in that** the step of performing the resource sensing and selection process on the at least one selected usable component carrier further comprises: in response to number of times of collisions in a first selected usable component carrier of the at least one selected usable component carrier exceeding a threshold value, selecting another one of the candidate component carriers with a highest priority as a newly selected usable component carrier and performing the resource sensing and selection process on the newly selected usable component carrier.

25. The resource sensing and selection method according to claim 1, **characterized in that** the user equipment (100) being adapted to a vehicle-to-everything (V2X) mode 4.

26. A user equipment (100), **characterized by** comprising:

a receiver (120), receiving a signal;
a transmitter (130), transmitting the signal;
a processor (160), coupled to the receiver (120) and the transmitter (130), and configured to:

measure and obtain channel statuses for all of a plurality of all component carriers through the receiver (120);
determine candidate component carriers from all the component carriers according to the measurement values of the channel statuses for all the component carriers and a ProSe Per-packet Priority (PPPP) (PPPP1, PPPP2, PPPP3, PPPP4) corresponding to the user equipment (100), wherein number of the candidate component carriers is an integer greater than or equal to zero; and
select at least one of the candidate component carriers as at least one selected usable component carrier and perform a resource sensing and selection process on the at least one selected usable component carrier through the receiver (120).

27. The user equipment (100) according to claim 26, **characterized in that** the processor (160) is configured to:

compare measurement value of the channel status for each of the component carriers with a channel status threshold value corresponding to the PPPP (PPPP1, PPPP2, PPPP3, PPPP4) and to each of the component carriers;
in response to the measurement value of the channel status for a first component carrier of the component carriers being smaller than the corresponding channel status threshold value, take the first component carrier as one of the candidate component carriers; and
in response to the measurement value of the channel status for the first component carrier being greater than or equal to the corresponding channel status threshold value, not take the first component carrier as one of the candidate component carriers.

28. The user equipment (100) according to claim 27, **characterized in that** the processor (160) is configured to:

obtain a channel status threshold value-PPPP mapping table, wherein the channel status threshold value-PPPP mapping table records the channel status threshold values corresponding to all of the PPPPs (PPPP1, PPPP2, PPPP3, PPPP4) and to all of the component carriers; and
compare the measurement value of the channel status corresponding to the PPPP (PPPP1, PPPP2, PPPP3, PPPP4) of the user equipment (100) and to each of the component carriers with the corresponding channel status threshold value corresponding to the same PPPP (PPPP1, PPPP2, PPPP3, PPPP4) and to the same one of the component carriers in the channel status threshold value-PPPP mapping table.

29. The user equipment (100) according to claim 28, **characterized in that** all of the PPPPs (PPPP1, PPPP2, PPPP3, PPPP4) recorded in the channel status threshold value-PPPP mapping table comprise corresponding indexes arranged according to a priority order.

30. The user equipment (100) according to claim 29, **characterized in that** as to numbers of the component carriers corresponding to all of the PPPPs (PPPP1, PPPP2, PPPP3, PPPP4) recorded in the channel status threshold value-PPPP mapping table, the number of the component carriers corresponding to a PPPP (PPPP1, PPPP2, PPPP3, PPPP4) with higher priority in the priority order is greater than or equal to the number of the component carriers corresponding to a PPPP (PPPP1, PPPP2, PPPP3, PPPP4) with lower priority in the priority order.

31. The user equipment (100) according to claim 29, **characterized in that** the component carriers corresponding to each of the PPPPs (PPPP1, PPPP2, PPPP3, PPPP4) recorded in the channel status threshold value-PPPP mapping table comprise corresponding indexes arranged according to a second priority order.

32. The user equipment (100) according to claim 31, **characterized in that**
as to the second priority order of the component carriers corresponding to each of the PPPPs (PPPP1, PPPP2, PPPP3, PPPP4) recorded in the channel status threshold value-PPPP mapping table, the index of a component carrier with higher priority in the second priority order is smaller than or equal to the index of a component carrier with lower priority in the second priority order; and
as to the indexes with a foremost order arranged in the second priority order among the indexes of the component carriers corresponding to all of the PPPPs (PPPP1, PPPP2, PPPP3, PPPP4), the index with the foremost order in the component carriers corresponding to a PPPP (PPPP1, PPPP2, PPPP3, PPPP4) with higher priority in the priority order is smaller than or equal to the index with the foremost order in the component carriers corresponding to a PPPP (PPPP1, PPPP2, PPPP3, PPPP4) with lower priority in the priority order.

33. The user equipment (100) according to claim 29, **characterized in that** in each of the component carriers, the channel status threshold values corresponding to all the PPPPs (PPPP1, PPPP2, PPPP3, PPPP4) recorded in the channel status threshold value-PPPP mapping table differ from each other.

34. The user equipment (100) according to claim 28, **characterized in that** in each of to the PPPPs (PPPP1, PPPP2, PPPP3, PPPP4), the channel status threshold values corresponding to all the component carriers recorded in the channel status threshold value-PPPP mapping table differ from each other.

35. The user equipment (100) according to claim 33, **characterized in that** in all of the component carriers, as to the channel status threshold values corresponding to each of the PPPPs (PPPP1, PPPP2, PPPP3, PPPP4) recorded in the channel status threshold value-PPPP mapping table, the channel status threshold value corresponding to a component carrier having smaller index is greater than the channel status threshold value corresponding to a component carrier having larger index.

36. The user equipment (100) according to claim 28, **characterized in that** the channel status threshold value corresponding to one of the component carriers recorded in the channel status threshold value-PPPP mapping table corresponding to a first resource selection window is greater than the channel status threshold value corresponding to the same one of the component carriers recorded in the channel status threshold value-PPPP mapping table corresponding to a second resource selection window, and a time length of the first resource selection window is shorter than a time length of the second resource selection window.

37. The user equipment (100) according to claim 28, **characterized in that** all of the PPPPs (PPPP1, PPPP2, PPPP3, PPPP4) recorded in the channel status threshold value-PPPP mapping table correspond to at least one service type, and a priority of the at least one service type is the same.

38. The user equipment (100) according to claim 27, **characterized in that** a measurement value of each of the channel statuses is a channel busy ratio.

39. The user equipment (100) according to claim 26, **characterized in that** the processor (160) is further configured to:

   divide a sensing window (SW) according to at least one measurement period (MP1, MP2, MP3, MP4); and measure and obtain the measurement values of the channel statuses for all of the component carriers in the at least one measurement period (MP1, MP2, MP3, MP4) through the receiver (120).

40. The user equipment (100) according to claim 26, **characterized in that** the processor (160) is further configured to:

   select at least one of the candidate component carriers as the at least one selected usable component carrier according to a priority order of the candidate component carriers and a capability of the user equipment (100); and perform the resource sensing and selection process on the at least one selected usable component carrier.

41. The user equipment (100) according to claim 26, **characterized in that** the processor (160) is further configured to:

   divide a resource (R) of each of the at least one selected usable component carrier into a plurality of resource units (RU) according to time and/or frequency, wherein a size of each of the plurality of resource units (RU) is determined by an upper layer (163), and each of the plurality of resource units (RU) comprises at least one resource block (RB); and
   determine at least one idle resource unit in each of the at least one selected usable component carrier according to resource occupancy information, wherein the resource occupancy information is related to a resource allocation information for data transmission, and the at least one idle resource unit is a candidate resource configured for resource selection.

42. The user equipment (100) according to claim 41, **characterized in that** the processor (160) is further configured to: obtain the resource occupancy information from at least one scheduling assignment message.

43. The user equipment (100) according to claim 26, **characterized in that** the processor (160) is further configured to:

divide a resource (R) of each of the at least one selected usable component carrier into a plurality of subchannel resources according to time and/or frequency, wherein each of the plurality of subchannel resources comprises at least one resource block group;

determine a status of each of the plurality of subchannel resources in each of the at least one selected usable component carrier according to an energy threshold value;

in response to an energy obtained by measuring a first subchannel resource in one of the at least one selected usable component carrier being smaller than or equal to the energy threshold value, determine the first subchannel resource is an idle subchannel resource, wherein the idle subchannel resource is a candidate resource configured for resource selection; and

in response to the energy obtained by measuring the first subchannel resource being greater than the energy threshold value, determine the first subchannel resource is a busy subchannel resource.

44. The user equipment (100) according to claim 43, **characterized in that** the processor (160) is further configured to:

determine each busy subchannel resource in each of the at least one selected usable component carrier;

divide each busy subchannel resource into a plurality of resource block groups according to time and/or frequency;

determine a status of each of the plurality of resource block groups according to a second energy threshold value;

in response to an energy obtained by measuring a first resource block group in the busy subchannel resources being smaller than or equal to the second energy threshold value, determine the first resource block group is an idle resource block group (IRBG), wherein the idle resource block group (IRBG) is a candidate resource configured for resource selection; and

in response to the energy obtained by measuring the first resource block group being greater than the second energy threshold value, determine the first resource block group is not the idle resource block group (IRBG).

45. The user equipment (100) according to claim 26, **characterized in that** the processor (160) is configured to:
perform a resource reselection process on idle resources in each of the at least one selected usable component carrier according to previous information, wherein the previous information is a resource selection result performed previously on each of the at least one selected usable component carrier, and the resource selection result is associated with collision during resource selection.

46. The user equipment (100) according to claim 45, **characterized in that** the processor (160) is configured to:

sequentially allocate a corresponding location number to each of resource units (RU) in the at least one selected usable component carrier, wherein a size of each of the resource units (RU) is configured by an upper layer (163), and each of the resource units (RU) comprises at least one resource block (RB); and

randomly perform an initial resource selection process on one of idle resource units corresponding to one of the location numbers.

47. The user equipment (100) according to claim 46, **characterized in that** the processor (160) is configured to:

in response to no resource collision occurring during the initial resource selection process or the resource reselection process, continuously perform data transmission by using of a corresponding resource (R) selected in the initial resource selection process or the resource reselection process; and

in response to resource collision occurring during the initial resource selection process or the resource reselection process, perform the next resource reselection process on all idle resources or all collided resources sensed in the next resource sensing process according to a value of the location number corresponding to the corresponding resource selected in the initial resource selection process or the resource reselection process, wherein one of the collided resources indicates that a resource unit (RU) is simultaneously selected by at least two of the user equipment (100) during the resource selection or reselection process.

48. The user equipment (100) according to claim 26, **characterized in that** the processor (160) is configured to:
equally or unequally divide a resource pool (RP, RP2) corresponding to the at least one selected usable component carrier according to corresponding PPPPs (PPPP1, PPPP2, PPPP3, PPPP4).

49. The user equipment (100) according to claim 26, **characterized in that** the processor (160) is configured to:
in response to number of times of collisions in a first selected usable component carrier of the at least one selected usable component carrier exceeding a threshold value, select another one of the candidate component carriers with a highest priority as a newly selected usable component carrier and perform the resource sensing and selection process on the newly selected usable component carrier.

**50.** The user equipment (100) according to claim 26, **characterized in that** the user equipment (100) being adapted to a V2X mode 4.

FIG. 1

FIG. 2

Measuring and obtaining channel statuses for all component carriers (CCs) — S310

Determine several candidate CCs from all the CCs according to measurement values of the channel statuses for all the CCs and a PPPP corresponding to the UE — S330

Selecting at least one of the candidate CCs as at least one selected usable CC and performing a resource sensing and selection process on the at least one selected usable CC — S350

FIG. 3

SW

1000ms

Sensing period

Situation1: 50ms — MP1

Situation2: 100ms — MP2

Situation3: 200ms — MP3

Situation4: 500ms — MP4

## FIG. 4A

SW

1000ms

Sensing period

Situation1: 50ms — MP1

Situation2: 100ms — MP2

Situation3: 200ms — MP3

Situation4: 500ms — MP4

## FIG. 4B

| Upper layer | 163 |

Information of candidate CCs

Rough measurement values of the channel statuses for all CCs

| Physical layer | 161 |

# FIG. 5

100
Upper layer

First CC (first priority)

Second CC (second priority)

Third CC (third priority)

Fourth CC (fourth priority)

100
Physical layer

# FIG. 6

S710 — Performing a resource sensing and selection process on at least one selected usable CC

S715 — Determining whether the selected resource collides

No → S730 — Continuously using the selected resource

Yes

S750 — Performing a resource reselection process on the at least one selected usable CC, or selecting from other candidate CCs another newly selected usable CC and performing a resource sensing and selection process on the newly selected usable CC

FIG. 7

FIG. 8A

FIG. 8B

FIG. 8C

FIG. 8D

PPPP1

PPPP2

PPPP3

PPPP4

RP

## FIG. 9A

PPPP1

PPPP2

PPPP3

PPPP4

RP

## FIG. 9B

| | | | | | |
|---|---|---|---|---|---|
| 1 | 2 | 3 | 4 | 5 | |
| 6 | 7 | 8 | 9 | 10 | |
| 11 | 12 | 13 | 14 | 15 | |
| 16 | 17 | 18 | 19 | 20 | |
| 21 | 22 | 23 | 24 | 25 | RP2 |
| 26 | 27 | 28 | 29 | 30 | |

IRB

BRB

FIG. 10A

| | | | | | |
|---|---|---|---|---|---|
| 1 | 2 | 3 | 4 | 5 | |
| 6 | 7 | 8 | 9 | 10 | |
| 11 | 12 | 13 | 14 | 15 | |
| 16 | 17 | 18 | 19 | 20 | |
| 21 | 22 | 23 | 24 | 25 | RP2 |
| 26 | 27 | 28 | 29 | 30 | |

IRB

BRB

NCRB

CRB

FIG. 10B

Europäisches
Patentamt

European
Patent Office

Office européen
des brevets

# EUROPEAN SEARCH REPORT

Application Number

EP 18 20 6447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/160070 A1 (LG ELECTRONICS INC [KR]) 21 September 2017 (2017-09-21) | 1-3,13, 15,23, 25-28, 38,40, 48,50 | INV. H04W72/02 |
| Y | * abstract * | 16-18, 20-22, 24, 41-43, 45-47,49 | |
| A | | 4-12,14, 19, 29-37, 39,44 | |
| | -& US 2019/037430 A1 (LEE YOUNGDAE [KR] ET AL) 31 January 2019 (2019-01-31) <br> * paragraph [0006] - paragraph [0007] * <br> * paragraph [0012] - paragraph [0012] * <br> * paragraph [0015] - paragraph [0016] * <br> * paragraph [0063] - paragraph [0063] * <br> * paragraph [0080] - paragraph [0083] * <br> * paragraph [0100] - paragraph [0100] * <br> ----- | | |
| | | | TECHNICAL FIELDS SEARCHED (IPC) <br> H04W |
| X | WO 2017/176095 A1 (LG ELECTRONICS INC [KR]) 12 October 2017 (2017-10-12) | 1,2,14, 26,27,39 | |
| A | * abstract * <br> * paragraph [0001] - paragraph [0001] * <br> * paragraph [0008] - paragraph [0016] * <br> * paragraph [0141] - paragraph [0141] * <br> * paragraph [0144] - paragraph [0144] * <br> * paragraph [0148] - paragraph [0149] * <br> * paragraph [0163] - paragraph [0163] * <br> * paragraph [0183] - paragraph [0183] * <br> * paragraph [0185] - paragraph [0185] * <br> * paragraph [0455] - paragraph [0455] * <br> ----- | 3-13, 15-25, 28-38, 40-50 | |

-/--

The present search report has been drawn up for all claims

| Place of search | Date of completion of the search | Examiner |
|---|---|---|
| The Hague | 4 March 2019 | Boldrini, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 20 6447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CATT: "Discussion on UE autonomous resource allocation in PC5-based V2V", 3GPP DRAFT; R1-162267, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20160411 - 20160415 2 April 2016 (2016-04-02), XP051080072, Retrieved from the Internet: URL:http://www.3gpp.org/ftp/tsg_ran/WG1_RL 1/TSGR1_84b/Docs/ [retrieved on 2016-04-02] | 16-18, 20-22, 24, 41-43, 45-47,49 | |
| A | * paragraph [0001] - paragraph [0001] * * paragraph [02.2] - paragraph [02.4] * ----- | 1-15,19, 23, 25-40, 44,48,50 | |
| A | WO 2017/069445 A1 (LG ELECTRONICS INC [KR]) 27 April 2017 (2017-04-27) * the whole document * ----- | 1-50 | TECHNICAL FIELDS SEARCHED (IPC) |

The present search report has been drawn up for all claims

| Place of search | Date of completion of the search | Examiner |
|---|---|---|
| The Hague | 4 March 2019 | Boldrini, Stefano |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 18 20 6447

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2019

| Patent document cited in search report | | Publication date | Patent family member(s) | | Publication date |
|---|---|---|---|---|---|
| WO 2017160070 | A1 | 21-09-2017 | US | 2019037430 A1 | 31-01-2019 |
| | | | WO | 2017160070 A1 | 21-09-2017 |
| US 2019037430 | A1 | 31-01-2019 | US | 2019037430 A1 | 31-01-2019 |
| | | | WO | 2017160070 A1 | 21-09-2017 |
| WO 2017176095 | A1 | 12-10-2017 | WO | 2017176095 A1 | 12-10-2017 |
| | | | WO | 2017176096 A1 | 12-10-2017 |
| | | | WO | 2017176097 A1 | 12-10-2017 |
| | | | WO | 2017176098 A1 | 12-10-2017 |
| | | | WO | 2017176099 A1 | 12-10-2017 |
| WO 2017069445 | A1 | 27-04-2017 | US | 2018255559 A1 | 06-09-2018 |
| | | | WO | 2017069445 A1 | 27-04-2017 |

EPO FORM P0459

For more details about this annex : see Official Journal of the European Patent Office, No. 12/82